(19) Europäisches Patentamt European Patent Office Office européen des brevets

(11) **EP 4 492 069 A1**

(12) **EUROPEAN PATENT APPLICATION**
published in accordance with Art. 153(4) EPC

(43) Date of publication:
**15.01.2025 Bulletin 2025/03**

(21) Application number: **23766826.4**

(22) Date of filing: **07.03.2023**

(51) International Patent Classification (IPC):
**G01P 3/44** (2006.01)     **G01P 3/48** (2006.01)

(52) Cooperative Patent Classification (CPC):
**G01P 3/44; G01P 3/48**

(86) International application number:
**PCT/JP2023/008504**

(87) International publication number:
**WO 2023/171650 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022  JP 2022034713**

(71) Applicant: **DENSO CORPORATION**
**Kariya-city, Aichi 448-8661 (JP)**

(72) Inventors:
• **HORIHATA, Harumi**
  **Kariya- city, Aichi 4488661 (JP)**
• **ENOKIZONO, Kazuya**
  **Kariya- city, Aichi 4488661 (JP)**
• **AKAMA, Sadahiro**
  **Kariya- city, Aichi 4488661 (JP)**
• **OHMI, Tetsuya**
  **Kariya- city, Aichi 4488661 (JP)**
• **KIDA, Yoshihiro**
  **Nisshin-city, Aichi 4700111 (JP)**

(74) Representative: **TBK**
**Bavariaring 4-6**
**80336 München (DE)**

(54) **VEHICULAR DEVICE, PROGRAM, AND VEHICULAR SYSTEM**

(57)     A vehicular device includes a bearing (50, 350), an annular detection target (81, 82, 84, 85, 87, 88, 310, 370), a planar receiving coil (110, 120, 130, 140, 150) extending in a direction intersecting an axial direction of the bearing and provided at a position facing the detection target in the axial direction in a state of not contacting the detection target, and an excitation coil (100) to which an AC excitation voltage is supplied. The detection target is provided to rotate with the rotation of the wheel of the vehicle. When an excitation voltage is supplied to the excitation coil, a voltage is induced in the receiving coil. The vehicular device includes a parameter calculation section (72, 73) for calculating a rotational speed of the wheel based the output voltage signal from the receiving coil.

FIG.1

Processed by Luminess, 75001 PARIS (FR)

# EP 4 492 069 A1

**Description**

[Cross Reference to Related Applications]

The present application is based on Japanese Patent Application No. 2022-034713 filed March 7, 2022, the description of which is incorporated herein by reference.

[Technical Field]

The present disclosure relates to a vehicular device, a program, and a vehicular system.

[Background Art]

As described in, for example, PTL 1, there have been known vehicles including a wheel speed sensor outputting a signal corresponding to the rotational speed of the wheel, and a control device calculating the rotational speed of the wheel based on the output signal from the wheel speed sensor.

[Citation List]

[Patent Literature]

PTL 1: JP 2900001 B

[Summary of the Invention]

Instead of the wheel speed sensors based on the conventional art, there is a need for a new configuration that can detect the rotational speed of the wheel.
The present disclosure mainly aims to provide a vehicular device, a program and a vehicular system that can detect the rotational speed of the wheel.

[Solution to Problem]

In a first disclosure, a vehicular device applied to a vehicle includes

a bearing rotatably supporting a wheel of the vehicle with respect to a vehicle body of the vehicle;
an annular detection target extending in a circumferential direction of the bearing;
a planar receiving coil extending in a direction intersecting an axial direction of the bearing, the planar receiving coil being fixed to the vehicle body and provided at a position facing the detection target in the axial direction, the planar receiving coil being in a state of not contacting the detection target; and
an excitation coil to which an AC excitation voltage is supplied, wherein,
a first bearing member, that is one of an outer ring member and an inner ring member, is fixed to the wheel, and a second bearing member, which is the other of the outer ring member and the inner ring member, is fixed to a base;
the detection target is provided to rotate with rotation of the wheel;
the detection target includes at least one of

a configuration in which at least one metal portion and at least one portion penetrating in the axial direction of the bearing are alternately provided in the circumferential direction,
a configuration in which at least one concavity recessed in the axial direction and at least one convexity protruding in the axial direction relative to the at least one concavity are alternately provided in the circumferential direction, or
a configuration in which at least one metal portion and at least one non-metal portion are alternately provided in the circumferential direction;

a voltage is induced in the receiving coil in response to the excitation voltage being supplied to the excitation coil; and
the vehicular device includes a parameter calculation section calculating a rotational speed of the wheel based on an output voltage signal from the receiving coil.

When the detection target rotates, the receiving coil, to which an excitation voltage is supplied, outputs an induced voltage signal corresponding to the rotational speed of the wheel. Therefore, the parameter calculation section can calculate a rotational speed of the wheel based the output voltage signal from the receiving coil. The receiving coil is planar in shape and extends in the direction intersecting the axial direction of the bearing. Therefore, the receiving coil can be reduced in size. According to the first disclosure described above, the rotational speed of the wheel can be detected.

In a second disclosure according to the first disclosure, the vehicular device further includes

a motor serving as a driving power source of the vehicle, wherein
the motor includes a rotor including a magnet unit forming multiple magnetic poles with polarities alternating in a circumferential direction; and
the parameter calculation section further calculates a rotational angle of the rotor based on the output voltage signal from the receiving coil.

According to the second disclosure, a rotational angle (e.g., electrical angle) of the rotor used for motor control can be calculated, in addition to the rotational speed of the wheel.

In a third disclosure according to the first or second disclosure,

in response to the excitation voltage being supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and
the parameter calculation section further calculates a load acting on the wheel based on the output voltage signal from the receiving coil.

According to the third disclosure, a load acting on the wheel can be calculated, in addition to the rotational speed of the wheel.

[Brief Description of the Drawings]

The aim set forth above and other aims, features, and advantages of the present disclosure will be made clearer by the following detailed description given referring to the accompanying drawings. In the drawings:

Fig. 1 is a longitudinal cross-sectional view illustrating a wheel according to a first embodiment;
Fig. 2 is a plan view illustrating a race;
Fig. 3 is a diagram illustrating a state in which an inner wheel is tilted relative to an outer wheel when a lateral force is applied to the tire;
Fig. 4 is a diagram illustrating vertical displacement of the inner wheel when a vertical load is applied to the tire;
Fig. 5 is a diagram illustrating a detection unit;
Fig. 6 is a diagram illustrating an electrical configuration of the detection unit and a processor;
Figs. 7A to 7C are a set of projection diagrams illustrating an excitation coil and first and second receiving coils as viewed perpendicular to a multilayer substrate;
Fig. 8 is a diagram illustrating wiring patterns and vias formed on a first layer of the multilayer substrate;
Fig. 9 is a diagram illustrating wiring patterns and vias formed on a second layer of the multilayer substrate;
Fig. 10 is a diagram illustrating wiring patterns and vias formed on a third layer of the multilayer substrate;
Fig. 11 is a diagram illustrating wiring patterns and vias formed on a fourth layer of the multilayer substrate;
Fig. 12 is a diagram illustrating a relative positional relationship between the first and second receiving coils and shields;
Fig. 13 is a diagram illustrating a principle of detecting displacement and rotational angle;
Fig. 14 is a diagram illustrating a principle of detecting displacement and rotational angle;
Fig. 15 is a plan view illustrating a simplified second receiving coil;
Fig. 16 is a diagram illustrating an output voltage signal of a receiving coil and transition of the envelope of the signal;
Fig. 17 is a diagram illustrating transition of first and second envelopes;
Fig. 18 is a characteristic diagram illustrating a relationship between displacement signal and axial displacement;
Figs. 19A to 19B are a set of diagrams illustrating the change in envelope from a reference state when a lateral force is applied;
Figs. 20A to 20C are a set of diagrams illustrating a relative positional relationship between the first and second receiving coils and the shields when a vertical load is applied;
Figs. 21A to 21C are a set of diagrams illustrating the change in envelope from a reference state when a vertical load is applied;

Fig. 22 is a characteristic diagram illustrating a relationship between displacement signal and vertical displacement;

Fig. 23 is a diagram illustrating characteristic information in which first and second displacement signals are linked to displacements ΔY and ΔZ, lateral force, and vertical load.

Fig. 24 is a plan view illustrating a race according to a modification of the first embodiment;

Fig. 25 is a perspective view illustrating a race according to a modification of the first embodiment;

Fig. 26 is a plan view illustrating a race according to a modification of the first embodiment;

Fig. 27 is a diagram illustrating a relative positional relationship between first and second receiving coils and shields according to a second embodiment;

Fig. 28 is a diagram illustrating a receiving coil according to a third embodiment;

Figs. 29A to 29C are a set of diagrams illustrating a relative positional relationship between receiving coils and shields in a reference state, and transition of the envelope;

Figs. 30A to 30C are a set of diagrams illustrating a relative positional relationship between receiving coils and shields when a lateral force is applied, and transition of the envelope;

Figs. 31A to 31C are a set of diagrams illustrating a relative positional relationship between receiving coils and shields when a vertical load is applied, and transition of the envelope;

Fig. 32 is a diagram illustrating a race and a detection unit according to a fourth embodiment;

Fig. 33 is a longitudinal cross-sectional view illustrating a wheel according to a fifth embodiment;

Fig. 34 is a longitudinal cross-sectional view illustrating a wheel according to a sixth embodiment;

Fig. 35 is a longitudinal cross-sectional view illustrating a wheel according to a seventh embodiment;

Fig. 36 is a plan view illustrating a race;

Fig. 37 is a functional block diagram illustrating vehicle maintenance and management processing according to an eighth embodiment;

Fig. 38 is a diagram illustrating an example of a method of calculating a statistical value of the load acting on a wheel;

Fig. 39 is a diagram illustrating an example of a method of calculating a statistical value of the load acting on a wheel;

Fig. 40 is a diagram illustrating an example of timings of notification provided in maintenance notification processing;

Fig. 41 is a diagram illustrating an example of timings of notification provided in maintenance notification processing;

Fig. 42 is a diagram illustrating an example of timings of notification provided in maintenance notification processing;

Fig. 43 is a diagram illustrating an example of a method of diagnosing the life span of a vehicle component;

Fig. 44 is a diagram illustrating an example of a method of diagnosing the life span of a vehicle component and determining reuse;

Fig. 45 is a diagram illustrating an example of a method of determining reuse;

Fig. 46 is a diagram illustrating an example of a method of determining reuse;

Fig. 47 is a diagram illustrating an overall configuration of a vehicular system according to a ninth embodiment; and

Fig. 48 is a longitudinal cross-sectional view illustrating a wheel according to another embodiment.

[Description of the Embodiments]

<First Embodiment>

Referring to the drawings, a first embodiment of a vehicular device according to the present disclosure will be described. The vehicular device according to the present embodiment is configured such that a force acting on a wheel (drive wheel) including an in-wheel motor can be calculated. For example, the vehicle may be a four-wheel vehicle for passenger use having two front wheels and two rear wheels. However, the vehicle is not limited to this but may be a vehicle, such as a two-wheel vehicle, other than a four-wheel vehicle. The use of the vehicle is not limited to passenger use.

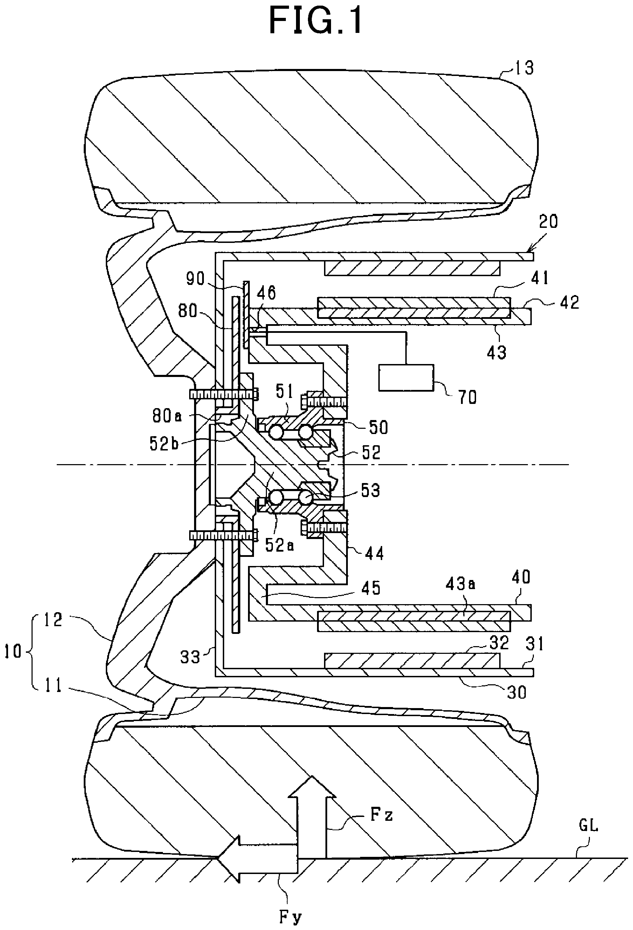

As shown in Fig. 1, a wheel includes a wheel unit 10 and an in-wheel motor 20. The wheel unit 10 includes a cylindrical rim 11, and a disk 12 provided at the outer end of the rim 11 in the vehicle width direction. The rim 11 has an outer periphery to which a tire 13 is attached.

The in-wheel motor 20 is accommodated in an inner space of the wheel unit 10 surrounded by the rim 11 and the disk 12, and imparts a rotational power to the wheel unit 10. The in-wheel motor 20 is an outer-rotor type motor including a rotor 30 and a stator 40 disposed radially inside the rotor 30.

The rotor 30 includes a cylindrical magnet holder 31 and a magnet unit 32 provided on the inner surface of the magnet holder 31. The magnet holder 31 faces the inner surface of the rim 11 from the outer end to the inner end of the in-wheel motor 20 in the axial direction thereof (in the width direction of the vehicle). The magnet unit 32 has a cylindrical shape concentric with the rotor 30 on the central axis of rotation thereof, and has a plurality of magnets fixed to the inner surface of the magnet holder 31. Specifically, the in-wheel motor 20 of the present embodiment is a surface permanent magnet synchronous motor (SPMSM). In the magnet unit 32, the magnets are disposed so that their polarity alternates in the circumferential direction of the rotor 30. Thus, a plurality of magnetic poles are formed in the magnet unit 32 in the circumferential direction. For example, the magnets may be sintered neodymium magnets. It should be noted that the in-wheel motor 20 may be an interior permanent magnet synchronous motor (IPMSM).

The rotor 30 includes a disk-shaped flat plate 33 provided at the outer end of the magnet holder 31 in the vehicle width direction to connect the magnet holder 31 and the disk 12 to each other. The disk 12 is fixed to the flat plate 33 via bolts. Thus, the rotor 30 rotates integrally with the wheel unit 10.

The stator 40 includes a cylindrical stator winding 41 disposed at a position radially opposite the magnet unit 32, and a cylindrical stator base 42 disposed radially inside the stator winding 41. The stator winding 41 includes a coil side portion provided at a position facing the magnet unit 32 in the radial direction, and coil end portions provided at both axial ends of the coil side portion.

The stator base 42 is fixed to the vehicle body via, for example, a knuckle or the like, and holds the stator winding 41 and the like. The stator base 42 includes a cylindrical portion 43 fixed to the vehicle body. The cylindrical portion 43 has a portion adjacent to the stator winding 41 in the radial direction serving as a stator core 43a.

The stator base 42 includes a fixing portion 44 extending radially inward from an axial end of the cylindrical portion 43. The rotor 30 is rotatably supported relative to the stator base 42 by the fixing portion 44 and a bearing 50. The fixing portion 44 has a radially outer end formed as an annular protrusion 45 protruding toward the flat plate 33. The protrusion 45 has a portion facing the flat plate 33 formed as a flat surface.

The bearing 50 is a rolling bearing (e.g., radial ball bearing) and includes an outer ring 51 corresponding to the first bearing member, an inner ring 52 corresponding to the second bearing member, and a plurality of rolling elements 53 (e.g., balls) disposed between the outer ring 51 and the inner ring 52. The outer ring 51 is fixed to the fixing portion 44 via bolts. The inner ring 52 includes a columnar portion 52a facing the outer ring 51 in the radial direction, and a flange 52b extending radially outward from one axial end of the columnar portion 52a. The flange 52b is fixed to the flat plate 33 and the disk 12 via bolts. Fig. 1 shows a state in which the inner ring 52 and the outer ring 51 are coaxial.

The vehicle includes an inverter electrically connected to the stator winding 41 and a storage unit electrically connected to the inverter. The storage unit, which is a battery such as a lithium ion battery, is provided to the vehicle body. Switching of the upper and lower arm switches constituting the inverter is controlled by a control device. Thus, the rotor 30 is rotated, causing the wheel to rotate. The inverter and the control device may be provided to the vehicle body, or may be built into the in-wheel motor 20.

In the inner space of the wheel unit 10, a disk-shaped race 80 corresponding to the rotation section for detection and a detection unit 90 corresponding to the displacement detection section are provided. The race 80 and the detection unit 90 are used for calculating a rotational angle (specifically, electrical angle or mechanical angle) of the rotor 30 of the in-wheel motor 20, a rotational speed of the wheel, a lateral force Fy acting between a contact surface (ground) GL and the wheel (tire 13), and a force acting between the contact surface GL and the wheel in a direction perpendicular to the contact surface GL (hereinafter referred to as vertical load Fz). The direction in which the lateral force acts is perpendicular to the direction in which the vertical load acts. For example, the calculated rotational angle (electrical angle) may be used in the control device, for switching control of the inverter, and the rotational speed of the wheel, lateral force, and vertical load may be used in the control device, for travelling control of the vehicle.

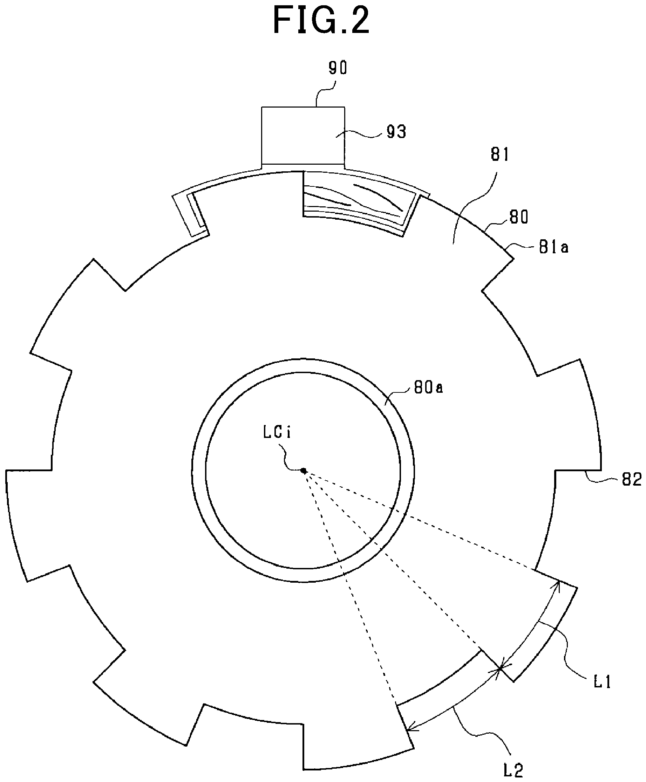

As shown in Figs. 1 and 2, the race 80 is disk-shaped and made of a metal material (e.g., iron or aluminum). The race 80 has a center portion through which a through hole is formed. The through hole of the race 80 has a peripheral edge at which a bent portion 80a is formed, bending toward the disk 12. The bent portion 80a is fitted to a through hole formed in the center portion of the flat plate 33 of the rotor 30. The race 80 is fixed to the flange 52b of the inner ring 52 via bolts in a state spaced apart from the flat plate 33 of the rotor 30 and in surface contact with the flange 52b. Thus, the race 80 is made coaxial with the inner ring 52. The race 80 rotates integrally with rotor 30 and wheel unit 10.

The race 80 has a radially outer end facing the protrusion 45 of the stator base 42. As shown in Fig. 2, at the radially outer end of the race 80, shields 81, as metal portions, and cutouts 82 penetrating the race 80 in the plate thickness direction are alternately formed in the circumferential direction. The shields 81 and the cutouts 82 form the annular detection target. In the present embodiment, a circumferential length L1 of each shield 81 is equal to a circumferential length L2 of each cutout 82. In the example shown in Fig. 2, eight sets of shields 81 and cutouts 82 are provided. LCi in Fig. 2 indicates a central axis of the inner ring 52.

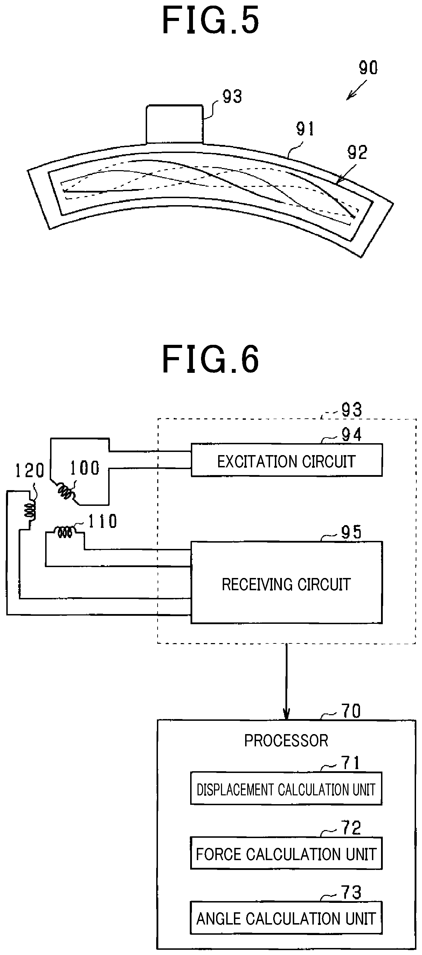

The detection unit 90 is a so-called eddy current type inductive sensor. As shown in Figs. 2, 5 and 6, the detection unit 90 includes a substrate 91, a coil part 92 provided on the substrate 91, and a circuit part 93. Fig. 2 is a diagram illustrating the race 80 as viewed from the wheel unit 10. Fig. 5 is a diagram illustrating the substrate 91 as viewed from the wheel unit 10. The substrate 91 is fixed to the flat surface of the protrusion 45. Thus, the substrate 91 extends in the direction perpendicular to the axial direction of the outer ring 51. In the present embodiment, the substrate 91 is fixed to the flat surface at the upper end of the annular protrusion 45.

As shown in Figs. 1 and 6, the circuit part 93 is electrically connected to a processor 70. Specifically, an insertion hole 46 is formed in the protrusion 45, and the processor 70 and the circuit part 93 are electrically connected to each other via wiring inserted in the insertion hole 46. The processor 70 may be provided to the vehicle body or may be built into the in-wheel motor 20.

The coil part 92 includes an excitation coil 100, a first receiving coil 110, and a second receiving coil 120. The coils 100, 110 and 120 are planar coils. The circuit part 93 is constituted of an integrated circuit. As shown in Fig. 6, the circuit part 93 includes an excitation circuit 94 that supplies a high-frequency excitation voltage to the excitation coil 100, and a receiving circuit 95. When an excitation voltage is supplied to the excitation coil 100, a voltage having the same or equivalent frequency as the excitation voltage is induced in the first and second coils 110 and 120. The receiving circuit 95 detects the voltage across each of the receiving coils 110 and 120 as an output voltage signal.

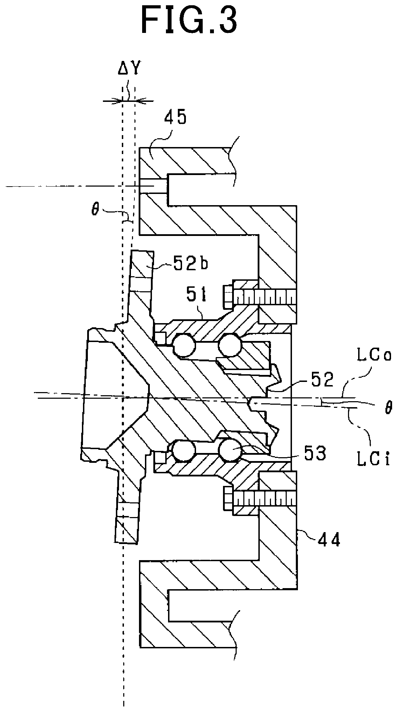

When a lateral force Fy acts on the wheel as shown in Fig. 1, an inclination $\theta$ of the central axis LCi of the inner ring 52 increases, as shown in Fig. 3, with respect to a central axis LCo of the outer ring 51. In this case, the axial distance between each of the receiving coils 110 and 120 and the race 80 changes to change the amplitude of the output voltage signal of each of the receiving coils 110 and 120. The detection unit 90 calculates an axial displacement $\Delta Y$ of the race 80 based on the change in amplitude, and calculates a lateral force Fy based on the calculated axial displacement $\Delta Y$.

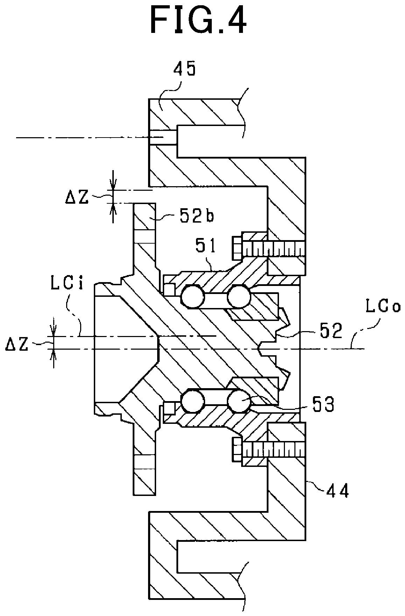

When the vertical load Fz acts on the wheel, the central axis LCi of the inner ring 52 is displaced, as shown in Fig. 4, in the direction orthogonal to the central axis LCo of the outer ring 51. As a result, the race 80 fixed to the flange 52b is also displaced. In this case, the detection unit 90 is configured to change the amplitude of the output voltage signal of each of the receiving coils 110 and 120. This configuration will be described in detail later. Based on the amplitude change, the detection unit 90 calculates a displacement of the race 80 in the direction orthogonal to the axial direction and the vehicle length direction (hereinafter referred to as vertical displacement $\Delta Z$), and calculates a vertical load Fz based on the calculated vertical displacement $\Delta Z$.

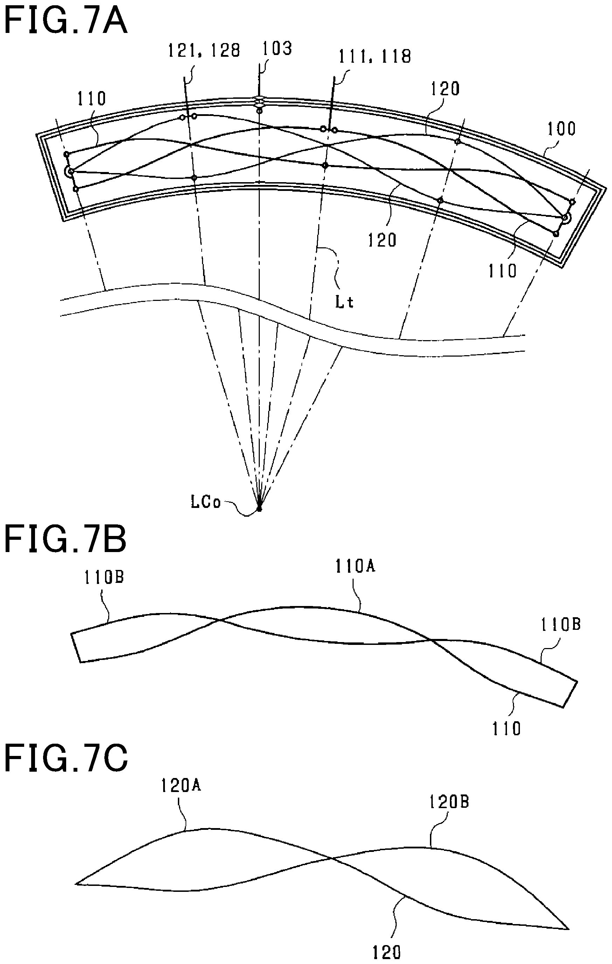

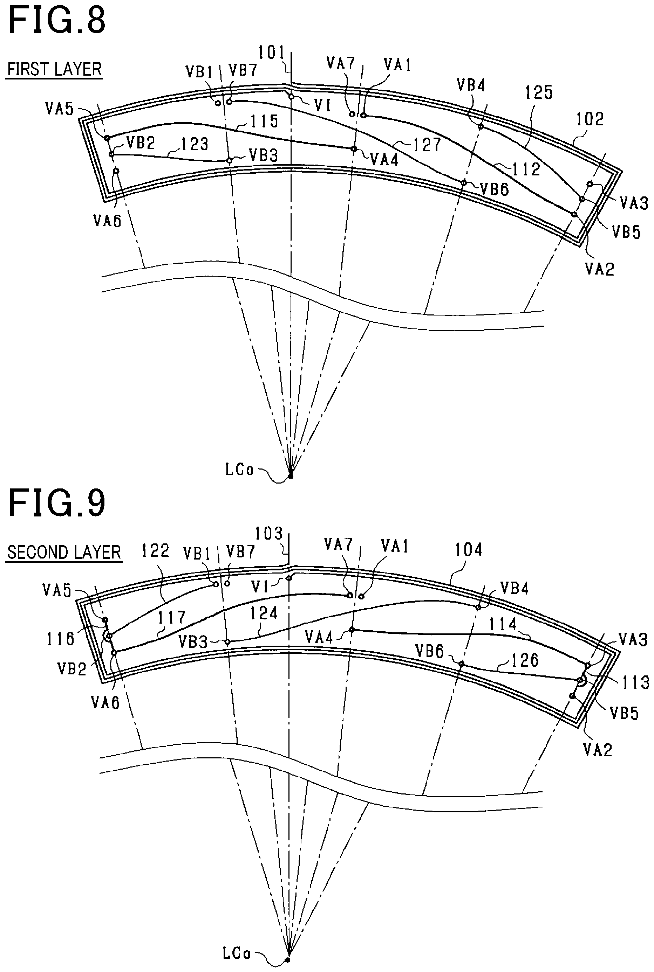

Referring now to Figs. 7 to 11, the coil part 92 will be described. In the present embodiment, the substrate 91 is a multi-layer substrate (specifically, a four-layer substrate), and the excitation coil 100 and the receiving coils 110 and 120 constituting the coil part 92 are constituted of wiring patterns on the multi-layer substrate. Figs. 8 to 11 show the wiring patterns formed on each layer when the substrate 91 is viewed from the race 80 side. Fig. 7A is a diagram showing the wiring patterns of the second to fourth layers projected onto the wiring pattern of the first layer.

First, the excitation coil 100 will be described. As shown in Figs. 8 and 9, the excitation coil 100 is formed in a first layer and a second layer adj acent to each other in the thickness direction of the substrate 91. The wiring patterns on the individual layers are electrically connected to each other by a conductor filled in an excitation-side via VI. The first layer includes, as a wiring pattern, a first excitation end 101 electrically connected to the excitation circuit 94, and a first excitation pattern 102 formed by looping multiple times (three times) clockwise from the first excitation end 101 to the excitation-side via VI. The second layer includes a second excitation end 103 electrically connected to the excitation circuit 94, and a second excitation pattern 104 formed by looping multiple times (three times) counterclockwise from the second excitation end 103 to the excitation-side via VI. Thus, the excitation coil 100, as a six-turn planar coil, is formed on the substrate 91. The excitation coil 100 has an arc shape extending in the circumferential direction of the outer ring 51.

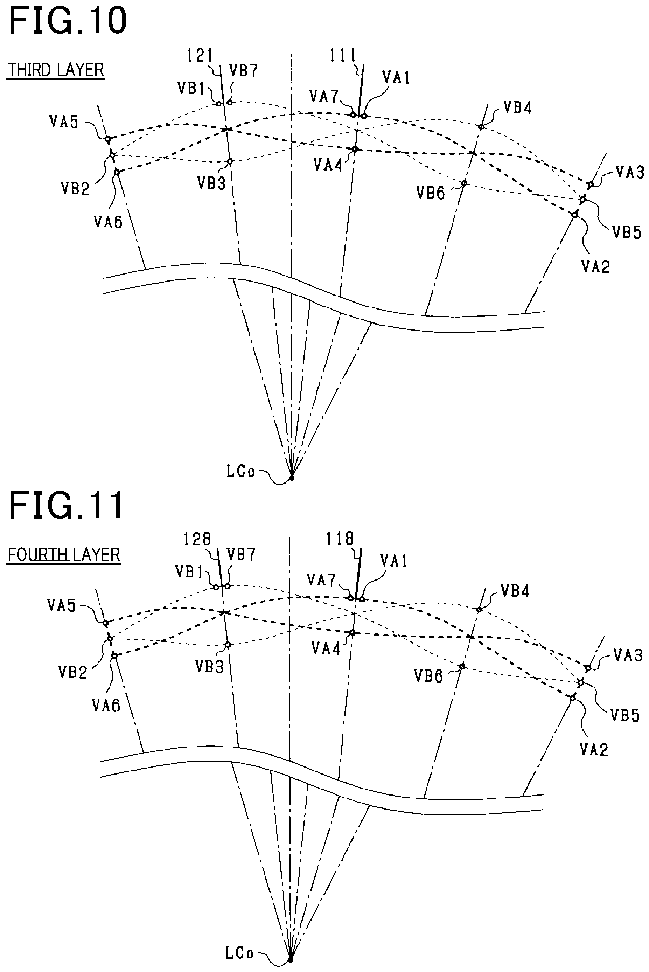

Next, the first receiving coil 110 will be described. As shown in Figs. 8 to 11, the first receiving coil 110 is formed on the first to fourth layers. As shown in Fig. 10, a first receiving end 111 electrically connected to the receiving circuit 95 is formed on the third layer. The first receiving end 111 is connected to a first end of a pattern 112 on the first layer through a first A-via VA1. A second end of the pattern 112 is connected to a first end of a pattern 113 on the second layer through a second A-via VA2. A second end of the pattern 113 is connected to a first end of a pattern 115 on the first layer through a third A-via VA3, a pattern 114, and a fourth A-via VA4. A second end of the pattern 115 is connected to a first end of a pattern 116 on the second layer through a fifth A-via VA5. A second end of the pattern 116 is connected to a second receiving end 118 on the fourth layer through a sixth A-via VA6, a pattern 117, and a seventh A-via VA7. The second receiving end 118 is connected to the receiving circuit 95. The receiving circuit 95 detects a potential difference between the first and second receiving ends 111 and 118 as a first output voltage signal v1.

As shown in Fig. 7A, the first receiving coil 110 is provided in an area enclosed by the excitation coil 100 in a plan view of the substrate 91. When an excitation voltage is being supplied to the excitation coil 100, the first receiving coil 110 is constituted of a first portion that generates a voltage of a first polarity between the first and second receiving ends 111 and 118 of the first receiving coil 110, and a second portion that generates a voltage of a second polarity that is opposite to the first polarity. Specifically, as shown in Fig. 7B, in a plan view of the substrate 91, the circumferential center of the first receiving coil 110 is a first portion 110A with one turn, and both ends of the first portion 110A of the first receiving coil 110 are each a second portion 110B with the same number of turns (1 turn) as the first portion 110A. Thus, the pattern shapes of the first and second portions 110A and 110B on one side with respect to a circumferential central axis Lt of the first receiving coil 110, and the pattern shapes of the first and second portions 110A and 110B on the other side are symmetrical about the central axis Lt.

Next, the second receiving coil 120 will be described. As shown in Figs. 8 to 11, the second receiving coil 120 is formed on the first to fourth layers. As shown in Fig. 10, a third receiving end 121 electrically connected to the receiving circuit 95 is formed on the third layer. The third receiving end 121 is connected to a first end of a pattern 122 on the second layer through a first B-via VB1. A second end of the pattern 122 is connected to a first end of a pattern 123 on the first layer through a second B-via VB2. A second end of the pattern 123 is connected to a first end of a pattern 125 on the first layer through the third A-via VA3, a pattern 124, and a fourth B-via VB4. A second end of the pattern 125 is connected to a first end of a pattern 126 on the second layer through a fifth B-via VB5. A second end of the pattern 126 is connected to a fourth receiving end 128 on the fourth layer through a sixth B-via VB6, a pattern 127, and a seventh B-via VB7. The fourth receiving end 128 is connected to the receiving circuit 95. The receiving circuit 95 detects a potential difference between the third and fourth receiving ends 121 and 128 as a second output voltage signal v2.

As shown in Fig. 7A, the second receiving coil 120 is provided in the area enclosed by the excitation coil 100 in a plan view of the substrate 91. The circumferential length of the second receiving coil 120 is the same as that of the first receiving coil 110. The radial length of the second receiving coil 120 is larger than that of the first receiving coil 110.

As shown in Fig. 7C, the second receiving coil 120 is constituted of a first portion 120A and a second portion 120B similarly to the first receiving coil 110. In a plan view of the substrate 91, one side of the second receiving coil 120 with respect to the circumferential central axis Lt is a first portion 120A, and the other side is a second portion 120B.

In the first and second receiving coils 110 and 120, the circumferential length from the central axis Lt to the circumferential end is the same as the circumferential length L1 of each shield 81 and each cutout 82. Also, as shown in Fig. 7A, in a plan view of the substrate 91, the both circumferential ends of the second receiving coil 120 are located at the same positions as those of the first receiving coil 110.

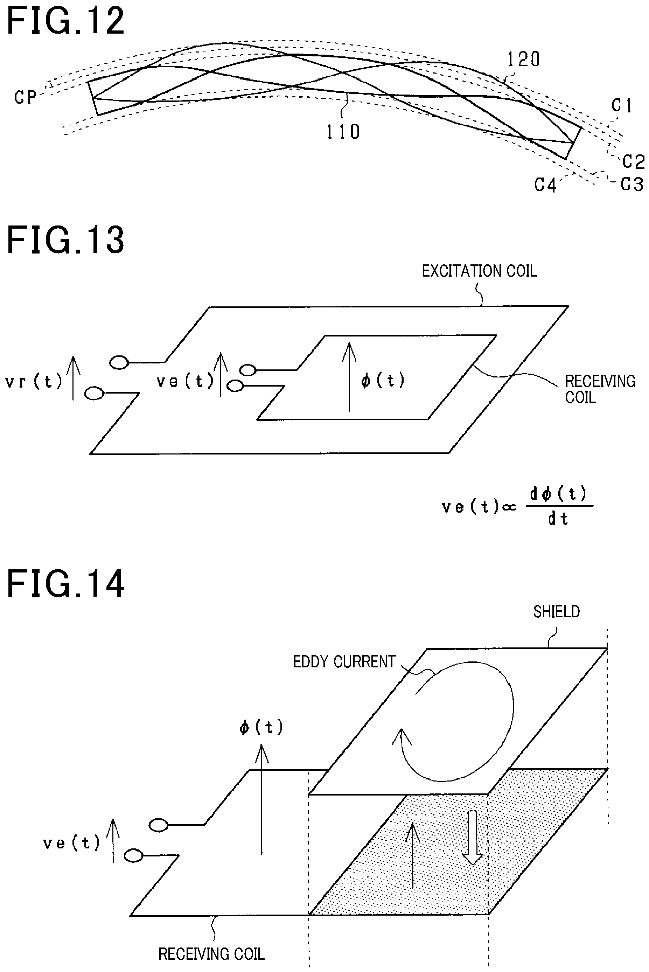

In a plan view of the substrate 91, the radially outer ends of the second receiving coil 120 are located, as shown in Fig. 12, on a first concentric circle C1 centered on the central axis LCo of the outer ring 51. The radially outer end of the first receiving coil 110 is located on a second concentric circle C2 centered on the central axis LCo. The radius of the second concentric circle C2 is smaller than that of the first concentric circle C1. The radially inner end of the first receiving coil 110 is located on a third concentric circle C3 centered on the central axis LCo. The radius of the third concentric circle C3 is smaller than that of the second concentric circle C2. The radially inner end of the second receiving coil 120 is located on a fourth concentric circle C4 centered on the central axis LCo. The radius of the fourth concentric circle C4 is smaller than that of the third concentric circle C3.

The radially outer end of the second receiving coil 120 protrudes from a radially outer end 81a of the shields 81 in a reference state. The reference state can be set as desired. The reference state may be, for example, a state in which the vehicle is stopped, and more specifically, a state in which the vehicle is stopped on a level road surface. CP in Fig. 12 indicates a concentric circle CP that is centered on the central axis LCo of the outer ring 51 and passes through the radially outer end 81a of the shields 81 in the reference state.

Next, referring to Figs. 13 to 23, the principle by which the detection unit 90 can detect a displacement and a rotational angle will be described.

First, referring to Figs. 13 and 14, the outline of the principle will be described. As shown in Fig. 13, when a high-frequency excitation voltage vr(t) is supplied to an excitation coil, a high-frequency current passes through the excitation coil. The current generates a magnetic flux φ(t) which interlinks a receiving coil. A voltage ve(t) proportional to the time rate of change of the interlinkage magnetic flux is induced across the receiving coil.

Fig. 14 shows a state in which part of the receiving coil is covered by a shield which is a metal portion. In a portion of the shield facing the receiving coil, an eddy current flows due to the interlinkage magnetic flux caused by energization of the excitation coil. The eddy current generates a magnetic flux for weakening the magnetic flux that generates an induced voltage in the receiving coil, thereby reducing the amplitude of the induced voltage in the receiving coil. In other words, the amplitude of the potential difference between the ends of the receiving coil is proportional to the area of the receiving coil that is not covered by the shield.

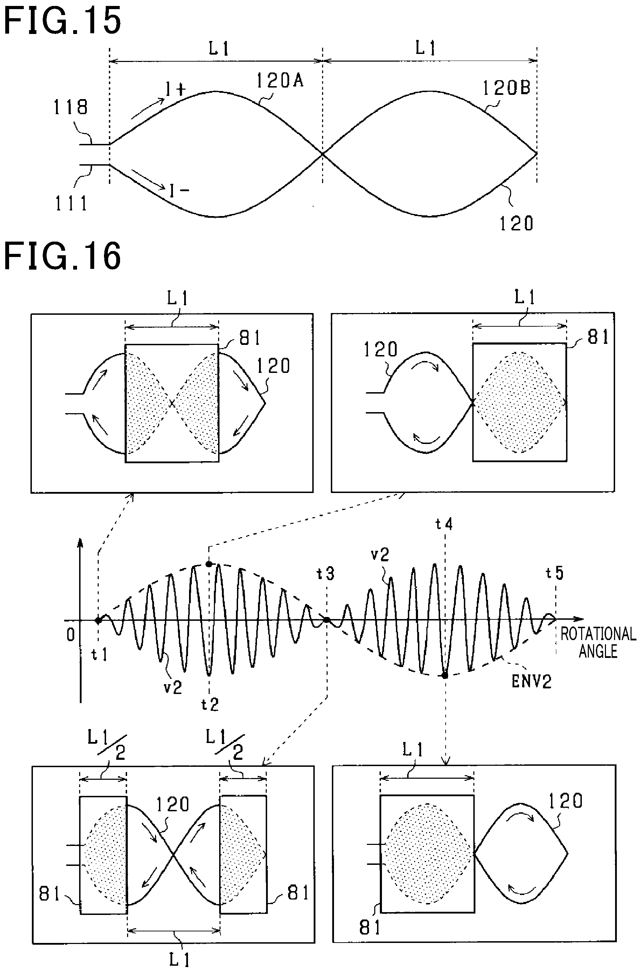

Based on the explanation referring to Figs. 13 and 14, a detection principle will be described referring to Figs. 15 and 16, taking the second receiving coil 120 as an example. Figs. 15 and 16 are diagrams illustrating the second receiving coil 120 and the shields 81 shown in Fig. 7 etc., with the circumferential direction being linear. Fig. 16 is a diagram illustrating a relative positional relationship between the second receiving coil 120 and the shields 81, and transition of the second output voltage signal v2 of the second receiving coil 120.

In Figs. 15 and 16, the direction in which current flows from the second receiving end 118 to the first receiving end 111 (I+) is referred to as a positive direction, and the direction in which current flows from the first receiving end 111 to the second receiving end 118 (I-) is referred to as a negative direction. Also, in Figs. 15 and 16, magnetic flux from the excitation coil 100 passes from the near side to the far side of the drawing paper.

At time t1 in Fig. 16, the center-side half of the first portion 120A and the center-side half of the second portion 120B are covered by a shield 81. A voltage that causes a current to flow in the positive direction is induced in the first portion 120A, and a voltage that causes a current to flow in the negative direction is induced in the second portion 120B. As a result, the induced voltage generated in the first portion 120A and the induced voltage generated in the second portion 120B cancel each other, and the amplitude of the second output voltage signal v2 becomes zero.

At time t2, of the first and second portions 120A and 120B, the second portion 120B is covered by the shield 81. In this case, a voltage that causes a current to flow in the positive direction is induced in the first portion 120A, and the induced voltage in the second portion 120B becomes zero. As a result, the amplitude of the second output voltage signal v2 has a maximum value on the side of the first polarity (positive polarity). The maximum value becomes larger as the race 80 approaches the second receiving coil 120.

At time t3, the end-side half of the first portion 120A and the end-side half of the second portion 120B are covered by respective shields 81. A voltage that causes a current to flow in the positive direction is induced in the first portion 120A, and a voltage that causes a current to flow in the negative direction is induced in the second portion 120B. As a result, the induced voltage generated in the first portion 120A and the induced voltage generated in the second portion 120B cancel each other, and the amplitude of the second output voltage signal v2 becomes zero.

At time t4, of the first and second portions 120A and 120B, the first portion 120A is covered by a shield 81. In this case, a voltage that causes a current to flow in the negative direction is induced in the second portion 120B, and the induced voltage in the first portion 120A becomes zero. As a result, the amplitude of the second output voltage signal v2 has a maximum value on the side of the second polarity (negative polarity) that is opposite to the first polarity. The maximum value becomes larger as the race 80 approaches the second receiving coil 120.

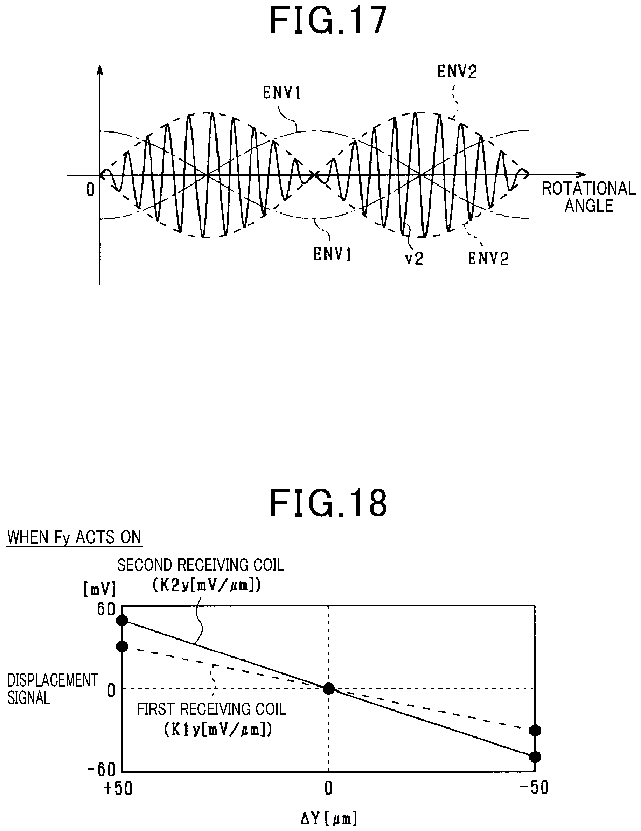

In the present embodiment, the shields 81 and and the cutouts 82 are alternately formed at the radially outer end of the race 80. Therefore, while the rotor 30 is rotating, the amplitude of the second output voltage signal v2 of the second receiving coil 120 changes periodically and, as shown by the dashed lines in Figs. 16 and 17, the envelope of the second output voltage signal v2 (hereinafter referred to as second envelope ENV2) becomes sinusoidal. For example, by setting the circumferential interval of the magnetic pole positions of the magnet unit 32 in relation to the circumferential length of the shields 81 and the cutouts 82, the amplitude or envelope can be associated with the electrical angle $\theta$e.

In the present embodiment, when an excitation voltage is being supplied to the excitation coil 100, the phase difference between the first output voltage signal v1 of the first receiving coil 110 and the second output voltage signal v2 of the second receiving coil 120 is 90 degrees. For this reason, as shown by the dash-dotted line in Fig. 17, the phase difference between the envelope of the first output voltage signal v 1 (hereinafter referred to as first envelope ENV1) and the second envelope ENV2 is also 90 degrees.

As shown in Fig. 17, the amplitude of the second envelope ENV2 is smaller than the amplitude of the first envelope ENV1. This is because, as shown in Fig. 7A, the area enclosed by the second receiving coil 120 is larger than the area enclosed by the first receiving coil 110 in a plan view of the substrate 91.

The receiving circuit 95 outputs a deviation of the actual amplitude of the first envelope ENV1 from the amplitude of a first envelope ES1 in the reference state to the processor 70, as a first displacement signal. The receiving circuit 95 outputs a deviation of the actual amplitude of the second envelope ENV2 from the amplitude of a second envelope ES2 in the reference state to the processor 70, as a second displacement signal. In the present embodiment, the receiving circuit 95 is configured so that the first and second displacement signals are zero in the reference state. The displacement signals are updated every time a maximum value on the positive polarity-side amplitude and a maximum value on the negative polarity-side amplitude appear in the output voltage signals v1 and v2.

The case where the lateral force acting on the wheel changes will be described.

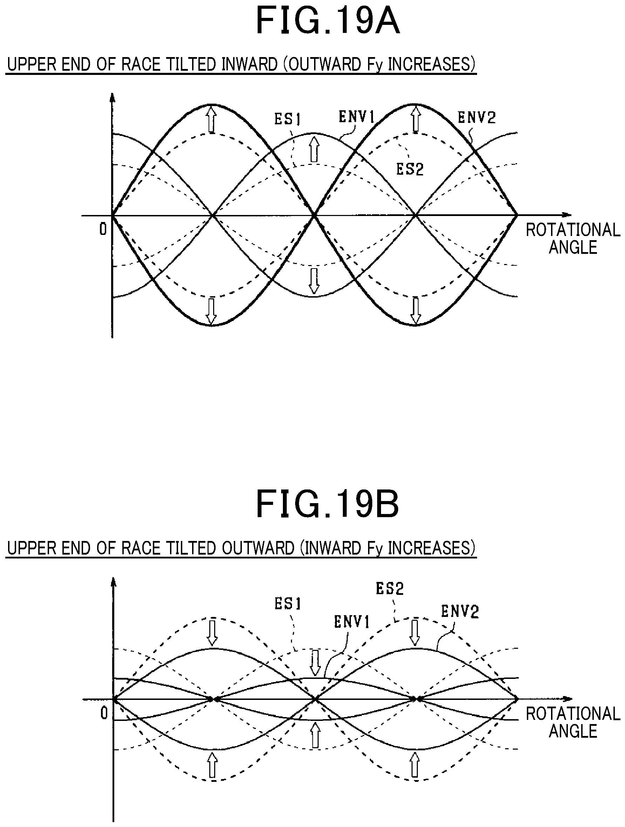

When the direction of the lateral force is toward the outside in the vehicle width direction, the inner ring 52 tilts relative to the outer ring 51 so that the upper end of the race 80 approaches the stator base 42 and the lower end thereof approaches the wheel unit 10. In this case, as shown in Fig. 18, the axial displacement $\Delta$Y and the polarity of each displacement signal are taken to be positive. As the axial displacement $\Delta$Y becomes larger in the positive direction, each displacement signal becomes larger in the positive direction. This is because, as shown in Fig. 19A, the closer the race 80 is to the first and second receiving coils 110 and 120, the larger the actual first and second envelopes ENV1 and ENV2 become relative to the first and second envelopes ES1 and ES2 in the reference state.

When the direction of the lateral force is toward the inside in the vehicle width direction, the inner ring 52 tilts relative to the outer ring 51 so that the lower end of the race 80 approaches the stator base 42 and the upper end thereof approaches the wheel unit 10. In this case, as shown in Fig. 18, the axial displacement $\Delta$Y and the polarity of each displacement signal are taken to be negative. As the axial displacement $\Delta$Y becomes larger in the negative direction, each displacement signal becomes larger in the negative direction. This is because, as shown in Fig. 19B, the further the race 80 is from the first and second receiving coils 110 and 120, the smaller the actual first and second envelopes ENV1 and ENV2 become relative to the first and second envelopes ES1 and ES2 in the reference state. On the other hand, the first and second displacement signals in the reference state are zero.

Next, the case where the vertical load acting on the wheel changes will be described.

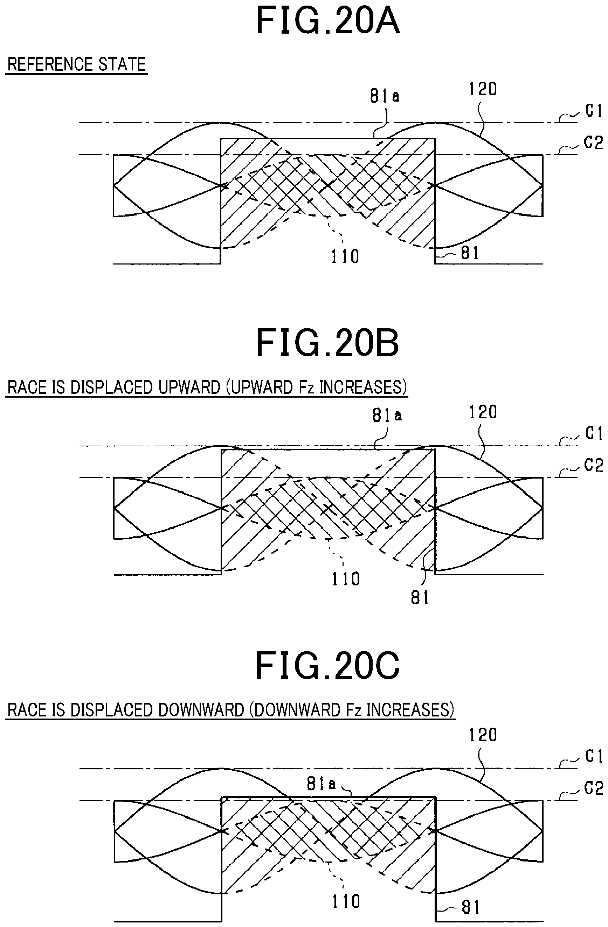

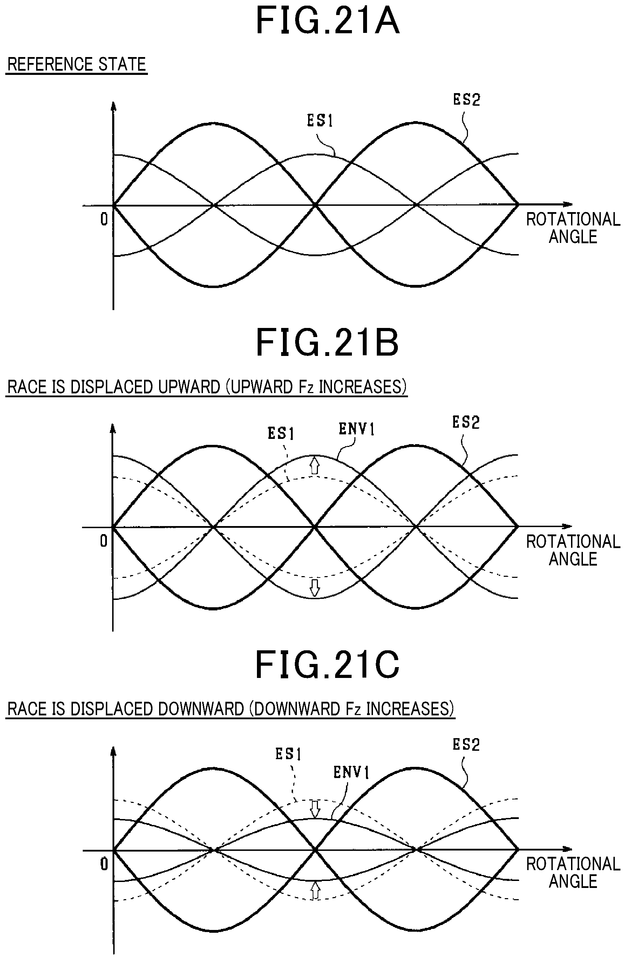

Fig. 20 illustrates a relative positional relationship between the receiving coils 110 and 120 and the shields 81 in the reference state. Fig. 20 is a set of diagrams illustrating the first and second receiving coils 110 and 120 and the shields 81 shown in Fig. 7 etc., with the circumferential direction being linear. In the drawing, the hatched portions are the portions of the receiving coils 110 and 120 which are covered by the shields 81. Fig. 21A shows transition of the envelopes in the reference state.

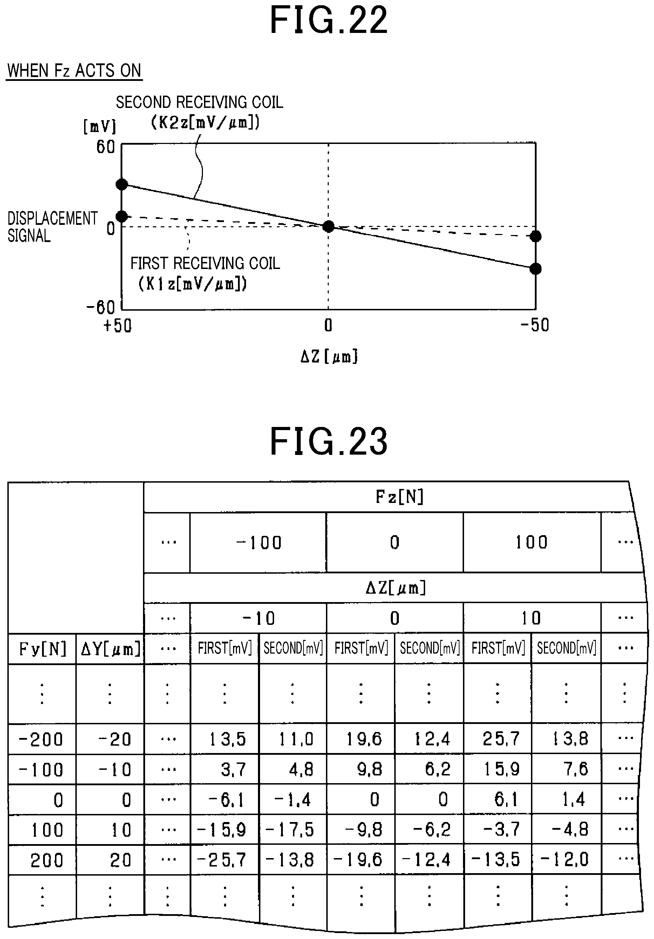

When the upward vertical load increases, the upper end of the race 80 is displaced upward. In this case, as shown in Fig. 22, the vertical displacement $\Delta$Z and the polarity of each displacement signal are taken to be positive. As the vertical displacement $\Delta$Z becomes larger in the positive direction, each displacement signal becomes larger in the positive direction. This is because, as shown in Fig. 20B, as the race 80 is displaced upward, the area of the second receiving coil 120 covered by the shields 81 increases, and, as shown in Fig. 21B, the actual first and second envelopes ENV1 and ENV2 become larger than the first and second envelopes ES1 and ES2 in the reference state.

On the other hand, when the downward vertical load increases, the upper end of the race 80 is displaced downward. In this case, as shown in Fig. 22, the vertical displacement $\Delta Z$ and the polarity of each displacement signal are taken to negative. As the vertical displacement $\Delta Z$ becomes larger in the negative direction, each displacement signal becomes larger in the negative direction. This is because, as shown in Fig. 20C, as the race 80 is displaced downward, the area of the second receiving coil 120 covered by the shields 81 decreases, and, as shown in Fig. 21C, the actual first and second envelopes ENV1 and ENV2 become smaller than the first and second envelopes ES1 and ES2 in the reference state.

As shown in Fig. 18, a second lateral force coefficient K2y, which is the change in the second displacement signal per unit change in the axial displacement $\Delta Y$, is larger than a first lateral force coefficient K1y, which is the change in the first displacement signal per unit change in the axial displacement $\Delta Y$. This is because, the area enclosed by the second receiving coil 120 is larger than the area enclosed by the first receiving coil 110 in a plan view of the substrate 91.

As shown in Fig. 22, a second vertical load coefficient K2z, which is the change in the second displacement signal per unit change in the vertical displacement $\Delta Z$, is larger than a first vertical load coefficient K1z, which is the change in the first displacement signal per unit change in the vertical displacement $\Delta Z$. This is because, the area enclosed by the second receiving coil 120 is larger than the area enclosed by the first receiving coil 110 in a plan view of the substrate 91.

Furthermore, the second vertical load coefficient K2z is smaller than the second lateral force coefficient K2y, and the first vertical load coefficient K1z is smaller than the first lateral force coefficient K1y. This is because, for example, rigidity of the wheel in the vertical direction is larger than the rigidity in the vehicle width direction. In the present embodiment, a relationship K2y>K1y>K2z>K1z is established.

From the above, the combination of the axial displacement $\Delta Y$ and the vertical displacement $\Delta Z$ can be uniquely linked to the combination of the first displacement signal and the second displacement signal. For this reason, a displacement calculation unit 71 constituting the processor 70 calculates an axial displacement $\Delta Y$ and a vertical displacement $\Delta Z$ based on the first and second displacement signals, and map information or formula information in which first and second displacement signals, axial displacement $\Delta Y$, and vertical displacement $\Delta Z$ are correlated with each other.

A force calculation unit 72 constituting the processor 70 calculates a lateral force Fy based on the calculated axial displacement $\Delta Y$ and the map information or formula information in which axial displacement $\Delta Y$ and lateral force Fy are correlated with each other. The force calculation unit 72 calculates a vertical load Fz based on the calculated vertical displacement $\Delta Z$ and the map information or formula information in which vertical displacement $\Delta Z$ and vertical load Fz are correlated with each other.

The map information or formula information may be stored in a storage unit (e.g., non-volatile memory) included in the processor 70. The force calculation unit 72 may calculate a lateral force Fy and a vertical load Fz based on the first and second displacement signals, and the map information or formula information in which first and second displacement signals, lateral force Fy, and vertical load Fz are correlated with each other. Calculation of a load based on the first and second displacement signals and the map information or formula information can be applied to the following embodiments in which the first and second displacement signals are used.

An angle calculation unit 73 constituting the processor 70 calculates a rotational angle (e.g., electrical angle $\theta e$) of the rotor 30 based on at least one of the first and second output voltage signals v1 and v2.

Specifically, for example, the angle calculation unit 73 may calculate an electrical angle $\theta e$ based on the first envelope curve ENV1 or the second envelope curve ENV2. This is a calculation method based on the fact that the envelope is information indicating transition of the amplitude of the output voltage signal, and that the amplitude of the output voltage signal depends on the rotational angle.

Also, for example, the angle calculation unit 73 may calculate an electrical angle $\theta e$ using synchronous detection and a low-pass filter by inputting the first and second output voltage signals v1 and v2 and the excitation voltage vr. This calculation method, which is a digital tracking method, is described in paragraphs 0028 to 0030 of the specification of JP 2015-073407 A, for example.

The angle calculation unit 73 calculates a rotational speed of the wheel based on the first envelope ENV1 or the second envelope ENV2. This calculation method is based on the fact that, while the race 80 is rotating, the higher the rotational speed of the race 80, the higher the frequency of the envelope. The angle calculation unit 73 and the force calculation unit 72 correspond to the parameter calculation section.

The angle calculation unit 73 may calculate a rotational speed of the wheel based on a time differential value of the calculated electrical angle.

According to the present embodiment described above in detail, the axial displacement $\Delta Y$ and the vertical displacement $\Delta Z$ can be calculated appropriately, and therefore the accuracy of calculating the lateral force Fy and the vertical load Fz can be improved. Furthermore, the single detection unit 90 and the processor 70 can calculate the rotational speed and electrical angle of the wheel as well as the load acting on the wheel. This can reduce the number of on-vehicle sensors.

The receiving coils 110 and 120 have a planar shape and extend in the direction intersecting the axial direction of the bearing 50. Therefore, the receiving coils 110 and 120 can be reduced in size. Because of being planar, the receiving coils 110 and 120 can be easily disposed even when a large space cannot be secured in the axial direction in the inner space of the wheel unit 10.

The detection unit 90 is provided to the stator base 42 at a position radially away from the bearing 50 and facing the radial end of the race 80 in the axial direction. The race 80 has a portion facing the detection unit 90 in the axial direction, i.e., a portion spaced radially outward from the bearing 50. Therefore, when a lateral force acts on the wheel, the axial displacement of the portion of the race 80 facing the detection unit 90 can be increased. As a result, detection accuracy can be improved for the axial displacement $\Delta Y$, and further, calculation accuracy can be improved for the lateral force Fy applied to the wheel constituting the unsprung mass of the vehicle.

Since the in-wheel motor 20 has an outer-rotor type configuration, the radial end of the race 80 can be disposed at a position greatly apart from the bearing 50 in the radial direction. Thus, detection accuracy can be improved for the axial displacement $\Delta Y$.

The first and second receiving coils 110 and 120 are provided closer to the wheel unit 10 in the axial direction than to the coil end constituting the stator winding 41. This can suppress the influence of noise and the like due to energization of the stator winding 41, on the induced voltages in the first and second receiving coils 110 and 120. As a result, detection accuracy can be improved for the axial displacement $\Delta Y$, vertical displacement $\Delta Z$, and rotational angle.

<Modifications of First Embodiment>

The race is not limited to have the configuration shown in Fig. 1, etc., but may have the following configurations (A) and (B), for example.

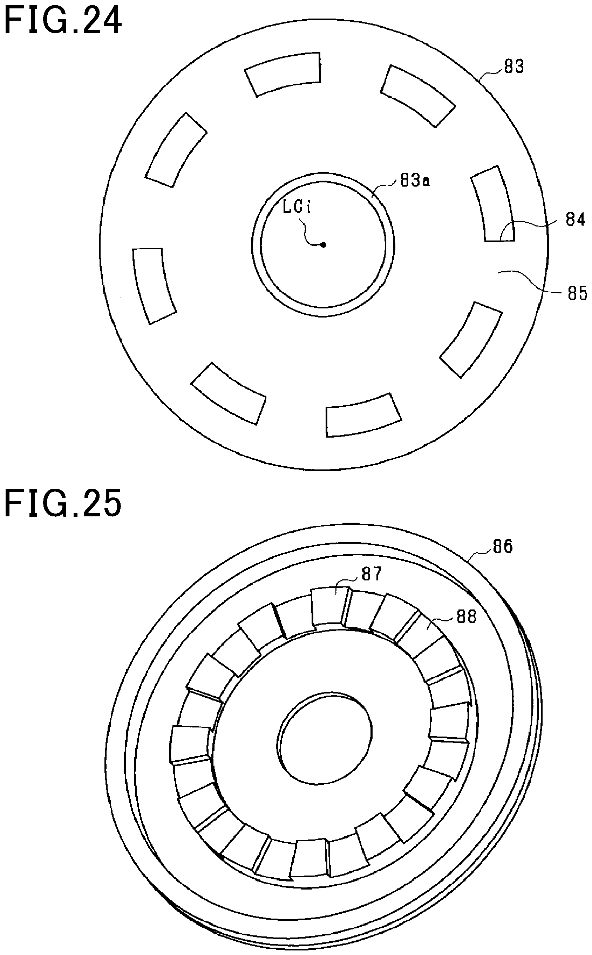

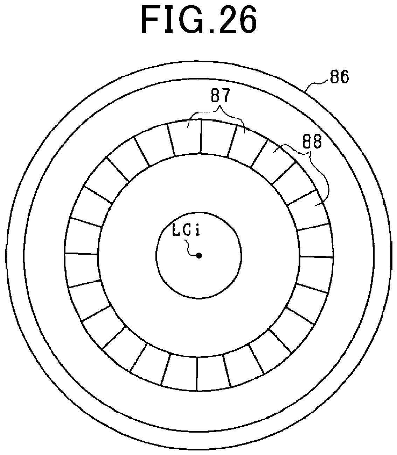

(A) As shown in Fig. 24, a race 83 includes shields 85 and openings 84 penetrating the race, which are arranged alternately in the circumferential direction. 83a in Fig. 24 corresponds to the bent portion 80a shown in Figs. 1 and 2. The circumferential length of each opening 84 corresponds to the circumferential length of each cutout 82 of Fig. 2.
(B) As shown in Figs. 25 and 26, a race 86 includes convexities 87 protruding from the flat surface of the race 86 in the axial direction of the inner ring 52, so as to alternate in the circumferential direction with concavities 88 protruding from the flat surface of the race 86 in the axial direction and recessed in the axial direction of the inner ring 52 relative to the convexities 87. The circumferential length of each convexity 87 corresponds to the circumferential length of each shield 81 of Fig. 2, and the circumferential length of each concavity 88 corresponds to the circumferential length of each cutout 82 of Fig. 2. Being provided with the concavities 88 and convexities 87, the axial distance between each of the receiving coils 110 and 120 and the race 86 changes during rotation of the rotor 30. Using this change, the axial displacement $\Delta Y$ can be detected as in the first embodiment.

The radial length of the second receiving coil 120 may be the same as that of the first receiving coil 110. In addition, the position of the radially outer end of the second receiving coil 120 may be the same as the position of the radially outer end of the first receiving coil 110, and the position of the radially inner end of the second receiving coil 120 may be the same as the position of the radially inner end of the first receiving coil 110. In this case, the detection unit 90 and the processor 70 can calculate a lateral force Fy as a load acting on the wheel.

In this case, the two receiving coils formed on the substrate 91 may be coils with the same shape (e.g., second receiving coils 120). In this case, the induced voltages of the two receiving coils have the same phase.

<Second Embodiment>

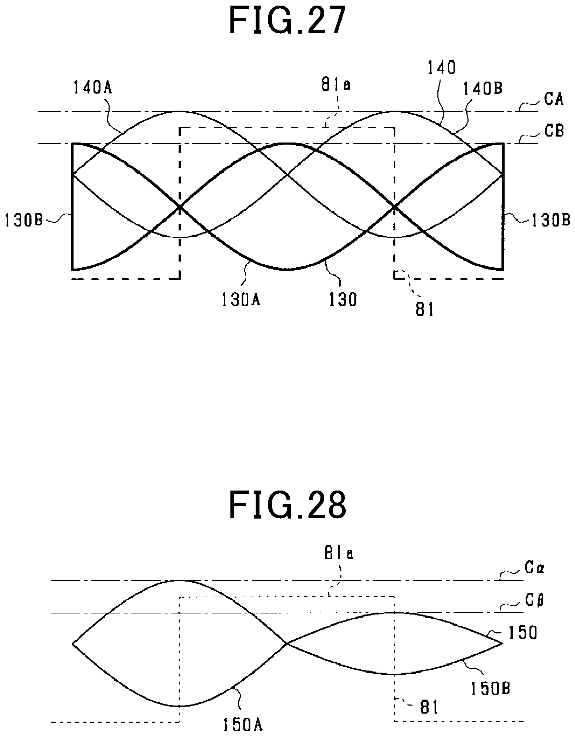

In the present embodiment, as shown in Fig. 27, a first receiving coil 130 and a second receiving coil 140 are changed in shape. Fig. 27 is a diagram illustrating the first and second receiving coils 130 and 140 and shields 81, with the circumferential direction being linear. The first receiving coil 130 corresponds to the first receiving coil 110 of the first embodiment, and the second receiving coil 140 corresponds to the second receiving coil 120 of the first embodiment. The following description will be focused on the differences from the first embodiment.

The radial length of the first receiving coil 130 is the same as that of the second receiving coil 140. In a plan view of the substrate 91, the radially outer end of the second receiving coil 140 is located on a first concentric circle CA centered on the central axis LCo of the outer ring 51. The radially outer end of the first receiving coil 130 is located on a second concentric circle CB centered on the central axis LCo. The radius of the second concentric circle CB is smaller than that of the first concentric circle CA. The radially outer end of the second receiving coil 140 protrudes from the radially outer end 81a of the shields 81 in the reference state.

The present embodiment also has characteristics shown in Figs. 18 and 22. Therefore, the displacement calculation unit 71 and the force calculation unit 72 can perform calculation processing in the same manner as in the first embodiment.

<Third Embodiment>

In the present embodiment, an axial displacement $\Delta Y$ and a vertical displacement $\Delta Z$ are calculated based on an output voltage signal of a single receiving coil instead of two receiving coils. The following description will be focused on the differences from the first embodiment.

Fig. 28 is a diagram illustrating a receiving coil 150, with the circumferential direction being linear. The receiving coil 150 corresponds to the second receiving coil 120 of the first embodiment, and includes a first portion 150A and a second portion 150B. The receiving coil 150 is formed on the substrate 91. The first portion 150A, the second portion 150B, and the shields 81 have the same circumferential dimensions.

In a plan view of the substrate 91, the radially outer end of the first portion 150A is located on a first concentric circle C$\alpha$ centered on the central axis LCo of the outer ring 51. The radially outer end of the second portion 150B is located on a second concentric circle C$\beta$ centered on the central axis LCo. The radius of the second concentric circle C$\beta$ is smaller than that of the first concentric circle C$\alpha$. The area enclosed by the first portion 150A is greater than the area enclosed by the second portion 150B. The radially outer end of the first receiving coil 150 protrudes from the radially outer end 81a of the shields 81 in the reference state.

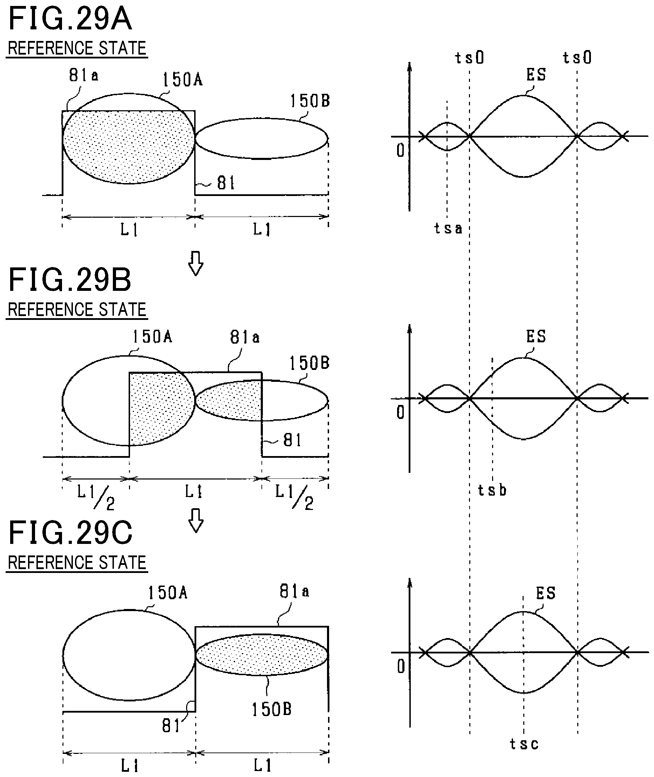

Next, referring to Figs. 29 to 31, the reason why the axial displacement $\Delta Y$ and the vertical displacement $\Delta Z$ can be calculated based on an output voltage signal of the single receiving coil 150.

Fig. 29 shows a relative positional relationship between the receiving coil 150 and the shields 81 in the reference state, and transition of the envelope of the output voltage signal in the reference state (hereinafter referred to as reference envelope ES). Fig. 29A shows a state in which part of the first portion 150A is covered by a shield 81 in a plan view of the receiving coil 150. Fig. 29B shows a state in which the race 80 has rotated and part of the first and second portions 150A and 150B is covered by the shield 81. Fig. 29C shows a state in which the race 80 has further rotated and the second portion 150B has been entirely covered by the shield 81.

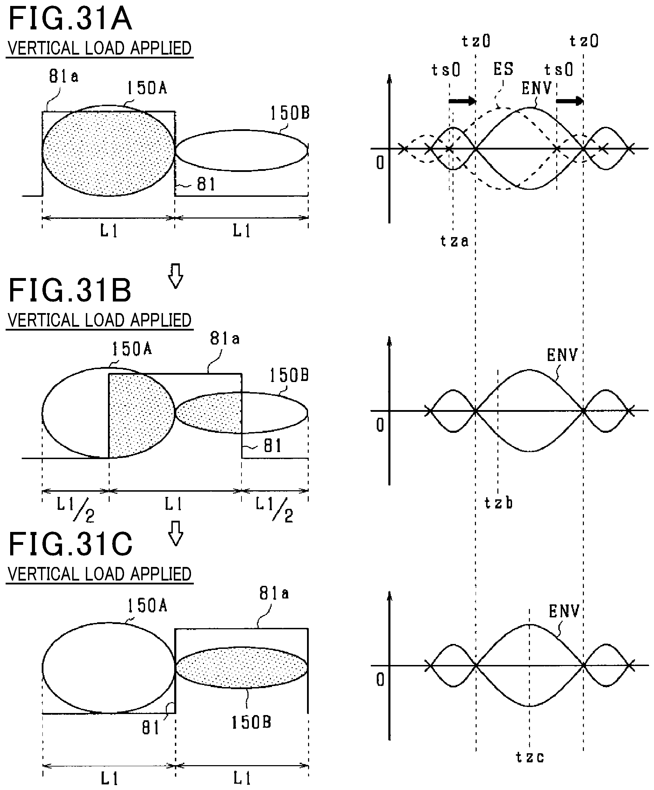

In the reference envelope ES, relatively small amplitudes and relatively large amplitudes appear alternately. In Fig. 31, zero cross timing of the reference envelope ES is indicated by ts0. In Fig. 29, when the relative positional relationship between the receiving coil 150 and the shield 81 is as shown in Fig. 29A, the reference envelope ES has a value at time tsa (i.e., small amplitude), when as shown in Fig. 29B, the reference envelope ES has a value at time tsb, and when as shown in Fig. 29C, the reference envelope ES has a value at time tsc (i.e., large amplitude).

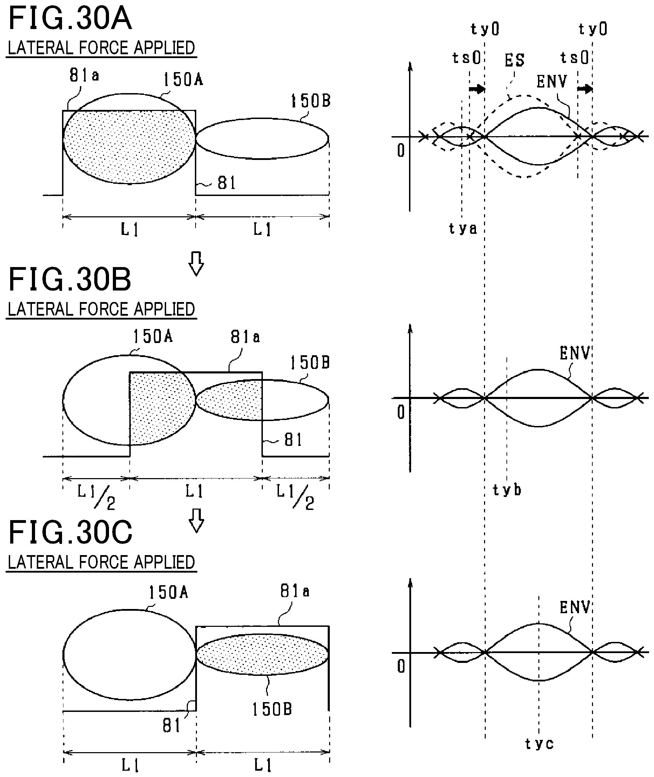

Next, Fig. 30 shows a relative positional relationship between the receiving coil 150 and the shields 81, and transition of an envelope curve ENV of the output voltage signal, when a lateral force acts on the wheel toward the inside in the vehicle width direction. In Fig. 30, when the relative positional relationship between the receiving coil 150 and a shield 81 is as shown in Fig. 30A, the envelope ENV has a value at time tya (i.e., small amplitude), when as shown in Fig. 30B, the envelope ENV has a value at time tyb, and when as shown in Fig. 30C, the envelope ENV has a value at time tyc (i.e., large amplitude).

When a lateral force acts on the wheel toward the inside in the vehicle width direction, the shield 81 is displaced so as to be away from the receiving coil 150. In this case, the small amplitude of the envelope ENV becomes smaller than the small amplitude of the reference envelope ES, and the large amplitude of the envelope ENV becomes smaller than the large amplitude of the reference envelope ES. Furthermore, the zero cross timing ty0 of the envelope ENV is delayed from the zero cross timing ts0 of the reference envelope ES.

On the other hand, when a lateral force acts on the wheel toward the outside in the vehicle width direction, the shield 81 is displaced so as to approach the receiving coil 150. In this case, the small amplitude of the envelope ENV becomes larger than the small amplitude of the reference envelope ES, and the large amplitude of the envelope ENV becomes larger than the large amplitude of the reference envelope ES. Furthermore, the zero cross timing ty0 of the envelope ENV becomes earlier than the zero cross timing ts0 of the reference envelope ES.

Therefore, the axial displacement $\Delta Y$ can be detected based on the large and small amplitudes of the envelope and the deviation between the zero cross timings of the reference envelope ES and the envelope ENV.

Next, Fig. 31 shows a relative positional relationship between the receiving coil 150 and the shields 81, and transition of an envelope curve ENV of the output voltage signal, when an upward vertical load acting on the wheel increases. In Fig. 31, when the relative positional relationship between the receiving coil 150 and a shield 81 is as shown in Fig. 31A, the envelope ENV has a value at time tza (i.e., small amplitude), when as shown in Fig. 31B, the envelope ENV has a value at time tzb, and when as shown in Fig. 31C, the envelope ENV has a value at time tzc (i.e., large amplitude).

When the upward vertical load increases with respect to the reference state, the shield 81 is displaced upward. In this case, the small amplitude of the envelope ENV becomes larger than the small amplitude of the reference envelope ES. This is because the area covered by the shield 81 in the first portion 150A increases to thereby decrease the induced voltage in the first portion 150A that cancels the potential difference generated on the second portion 150B. Moreover, the large amplitude of the envelope ENV remains unchanged from the large amplitude of the reference envelope ES. This is because the radially outer end of the second portion 150B does not protrude from the shield 81 even when the shield 81 is displaced upward.

When the upward vertical load increases with respect to the reference state, the zero cross timing tz0 of the envelope ENV is delayed from the zero cross timing ts0 of the reference envelope ES.

On the other hand, when the downward vertical load increases with respect to the reference state, the shield 81 is displaced downward. In this case, the small amplitude of the envelope ENV becomes smaller than the small amplitude of the reference envelope ES, and the large amplitude of the envelope ENV remains unchanged from the large amplitude of the reference envelope ES. Furthermore, the zero cross timing tz0 of the envelope ENV becomes earlier than the zero cross timing ts0 of the reference envelope ES.

Therefore, the vertical displacement $\Delta Z$ can be detected based on the large and small amplitudes of the envelope and the deviation between the zero cross timings of the reference envelope ES and the envelope ENV.

From the above, map information or formula information can be created that links combinations of small and large amplitudes of the envelope ENV, and deviation between the zero cross timings of the reference envelope ES and the envelope ENV, to combinations of the axial displacement $\Delta Y$ and vertical displacement $\Delta Z$. The displacement calculation unit 71 uses the envelope ENV based on the output voltage signal of the receiving coil 150 to calculate a small amplitude and a large amplitude of the envelope ENV and a deviation from the zero cross timing of the reference envelope ES. The displacement calculation unit 71 calculates an axial displacement $\Delta Y$ and a vertical displacement $\Delta Z$ based on the calculated small and large amplitudes, the deviation, and the map information or formula information. The force calculation unit 72 calculates a lateral force Fy based on the calculated axial displacement $\Delta Y$ and the map information or formula information in which axial displacement $\Delta Y$ and lateral force Fy are correlated with each other. The force calculation unit 72 calculates a vertical load Fz based on the calculated vertical displacement $\Delta Z$ and the map information or formula information in which vertical displacement $\Delta Z$ and vertical load Fz are correlated with each other. The displacement calculation unit 71 may detect, for example, a reference timing set in association with the electrical angle of the rotor 30, as the zero cross timing of the reference envelope ES. Also, as the map information or formula information, map information or formula information linking combinations of the small and large amplitudes of the envelope ENV and the deviation between the zero cross timings of the reference envelope ES and the envelope ENV, to combinations of the lateral force Fy and the vertical load Fz, may be stored in the storage unit. In this case, the force calculation unit 72 may calculate a lateral force Fy and a vertical load Fz based on the map information or formula information, the calculated small and large amplitudes, and the calculated deviation.

<Modifications of Third Embodiment>

As the receiving coil, a receiving coil having a shape as shown in Fig. 7B may be used. In this case, it is only necessary that the radial dimension of one of the first and second portions of the receiving coil is larger than the radial dimension of the other portion.

<Fourth Embodiment>

Referring to the drawings, a fourth embodiment will be described focusing on differences from the first embodiment. The detection unit 90 of the present embodiment calculates a force acting between the contact surface GL and the wheel in the vehicle length direction (hereinafter referred to as longitudinal load Fx) instead of the vertical load Fz. The direction in which the lateral force Fy acts is perpendicular to the direction in which the longitudinal load Fx acts. The longitudinal load Fx is used for cruise control of the vehicle in the control device.

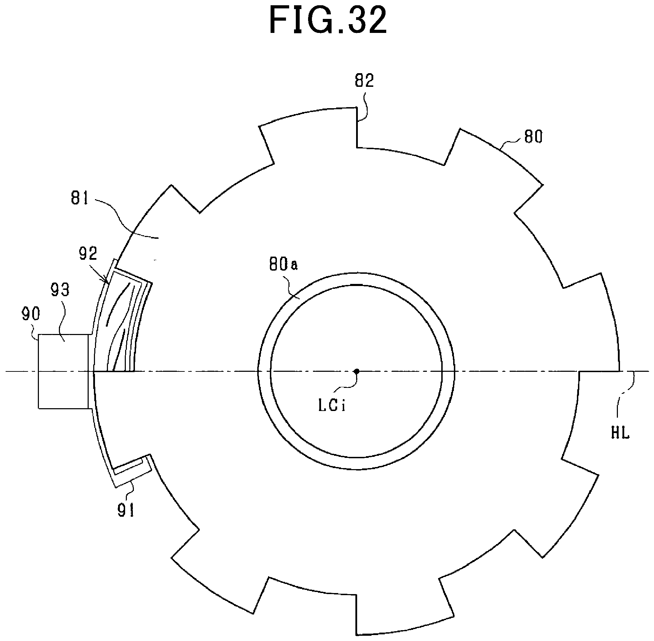

Fig. 32 shows the race 80 and the detection unit 90.

The first and second receiving coils 110 and 120 formed on the substrate 91 are provided straddling a horizontal axis HL passing through the central axis LCi of the inner ring 52 (rotation center of the race 80). For example, in a plan view of the flat surface of the race 80, the substrate 91 may be disposed so that the circumferential central axis Lt of the first and second receiving coils 110 and 120 aligns with the horizontal axis HL.

The first and second receiving coils 110 and 120 are provided near the front-side end or rear-side end among both ends of the race 80 in the vehicle length direction. The following description will be given taking an example in which the first and second receiving coils 110 and 120 are provided at the front-side end.

The longitudinal load Fx when the vehicle accelerates is taken to be positive, and the longitudinal load Fx when the vehicle decelerates is taken to be negative. When the longitudinal load Fx is positive, the shields 81 are displaced in the vehicle travel direction. This state corresponds to the state in the first embodiment in which the upward vertical load acting on the wheel increases. On the other hand, when the longitudinal load Fx is negative, the shields 81 are displaced in the opposite direction to the vehicle travel direction. This state corresponds to the state in the first embodiment in which the downward vertical load acting on the wheel increases.

The receiving circuit 95 outputs a deviation of the actual amplitude of the first envelope ENV1 from the amplitude of the first envelope ES1 in the reference state to the processor 70, as a first displacement signal. Also, the receiving circuit 95 outputs a deviation of the actual amplitude of the second envelope ENV2 from the amplitude of the second envelope ES2 in the reference state to the processor 70, as a second displacement signal.

The displacement calculation unit 71 calculates an axial displacement $\Delta Y$ and a vehicle lengthwise displacement $\Delta X$ based on the first and second displacement signals, and the map information or formula information in which first and second displacement signals, axial displacement $\Delta Y$, and vehicle lengthwise displacement $\Delta X$ are correlated with each other.

The force calculation unit 72 calculates a lateral force Fy based on the calculated axial displacement $\Delta Y$ and the map information or formula information in which axial displacement $\Delta Y$ and lateral force Fy are correlated with each other. The force calculation unit 72 calculates a longitudinal load Fx based on the calculated vehicle lengthwise displacement $\Delta X$ and the map information or formula information in which vehicle lengthwise displacement $\Delta X$ and longitudinal load Fx are correlated with each other.

According to the present embodiment described above, a single detection unit 90 can detect an axial displacement $\Delta Y$ and a vehicle lengthwise displacement $\Delta X$.

<Modifications of Fourth Embodiment>

As the first and second receiving coils, the first and second receiving coils 130 and 140 shown in Fig. 27 may be used. Furthermore, the number of receiving coils is not limited to two, but a single receiving coil as shown in Fig. 28 may be used.

<Fifth Embodiment>

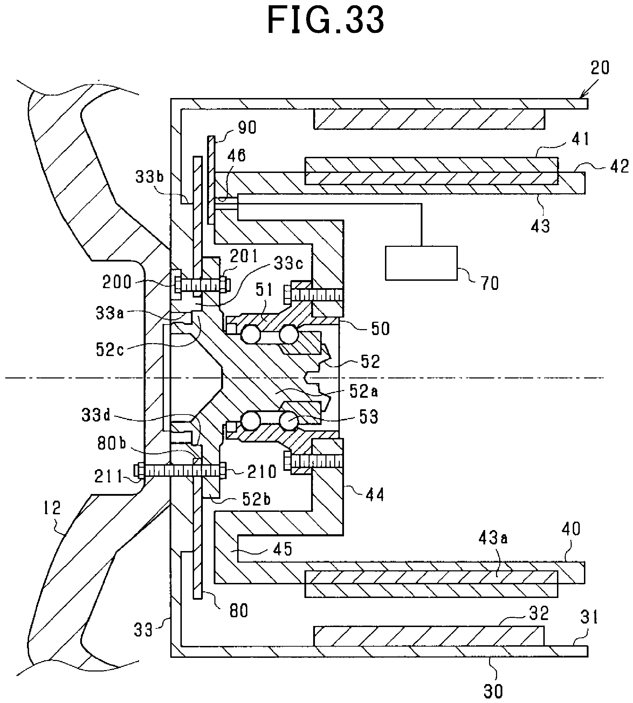

Referring to the drawings, a fifth embodiment will be described focusing on differences from the first embodiment. As shown in Fig. 33, the present embodiment adopts a configuration that can reduce coaxiality of the rotor 30, the race 80, and the bearing 50. It should be noted that, in Fig. 33, the components or corresponding components that are the same as the components shown in Fig. 1, etc. are given the same reference signs for the sake of convenience. Furthermore, the race 80 of the present embodiment includes no bent portion 80a.

The flat plate 33 constituting the rotor 30 has a radial center through which a through hole 33a is formed. The flat plate 33 has an inner surface in the vehicle width direction, on which an annular step 33b is formed, extending radially outward from the radially inner end. The step 33b has an inner surface in the vehicle width direction, provided as a flat surface. The step 33b has a radially inner end at which an annular positioning part 33c is formed, protruding inward in the vehicle width direction.

The race 80 has a radial center portion through which a through hole 80b is formed. With the flat surface of the race 80 abutting against the flat surface of the step 33b, the positioning part 33c is fitted to the through hole 80b of the race 80. Thus, the central axis of rotation of the rotor 30 is made coaxial with the central axis of rotation of the race 80.

The flange 52b of the inner ring 52 has a radially inner end at which an annular bearing-side step 52c is formed, protruding outward in the vehicle width direction. The flat plate 33 has a portion radially inner than the positioning part 33c, in which an annular recess 33d is formed, being recessed outward in the vehicle width direction. With the bearing-side step 52c being fitted to the recess 33d, the central axis of the inner ring 52, the central axis of rotation of the rotor 30, and the central axis of rotation of the race 80 are made coaxial. In particular, in the present embodiment, the flat surface of the flange 52b on the outer side in the vehicle width direction abuts against the flat surfaces of the race 80 and the positioning part 33c. This can suitably reduce coaxiality between the central axis of rotation of the rotor 30, the central axis of rotation of the race 80, and the central axis of the inner ring 52.

The flat plate 33, race 80, and flange 52b have a first through hole penetrating therethrough in the axial direction. Multiple first through holes are formed, being aligned in the circumferential direction (e.g., aligned at equal intervals in the circumferential direction). Bolts 200 are inserted into the respective first through holes. Each of the bolts 200 is inserted into the corresponding one of the first through holes with the head thereof oriented outward and with the shaft thereof oriented inward in the vehicle width direction. In this inserted state, the male thread at the tip of each of the shafts is screwed into the female thread of the corresponding one of nuts 201. Thus, the flat plate 33, race 80, and flange 52b in an overlapped state are sandwiched between the heads of the bolts 200 and the nuts 201. As a result, the rotor 30, race 80, and bearing 50 are integrated.

The flat plate 33, race 80, flange 52b, and disk 12 have a second through hole penetrating therethrough in the axial direction. Multiple second through holes are formed, being aligned in the circumferential direction (e.g., aligned at equal intervals in the circumferential direction) at positions shifted from the positions where the first through holes are formed. Bolts 210 are inserted into the respective second through holes. Each of the bolts 210 is inserted into the corresponding one of the second through holes with the head thereof oriented inward and with the shaft thereof oriented outward in the vehicle width direction. In this inserted state, the male thread of each of the bolts 210 is screwed into the female thread of the corresponding one of nuts 211. Thus, the flat plate 33, flange 52b, race 80, and disk 12 in an overlapped state are sandwiched between the heads of the bolts 210 and the nuts 211. As a result, the rotor 30, bearing 50, race 80, and wheel unit 10 are integrated.

Next, a method of manufacturing the drive wheel will be described. In the manufacturing method, a motor ASSY, after being assembled with a race 80 included therein, is mounted to the wheel unit 10.

With the flat surface of the step 33b abutting against the flat surface of the race 80, the positioning part 33c is fitted to the through hole 80b of the race 80. Thereafter, while sandwiching the race 80 between the step 33b and the flange 52b, the bearing-side step 52c is fitted to the recess 33d.

With the flat plate 33, race 80, and flange 52b overlapped each other, the bolts 200 are inserted into the respective first through holes with the heads thereof oriented outward relative to the rotor 30. Then, the female threads of the nuts 201 are screwed into the respective male threads of the bolts 200. Thus, the flat plate 33, race 80, and flange 52b in an overlapped state are sandwiched between the heads of the bolts 200 and the nuts 201. Thus, a motor ASSY in which the rotor 30, race 80, and bearing 50 are integrated is provided. Herein, since the flat surface of the race 80 has been brought into abutment against the flat surface of the step 33b, warpage of the race 80 can be suppressed when the nuts 201 are screwed into the bolts 200.

With the motor ASSY and the disk 12 overlapped each other, the bolts 210 are inserted into the respective second through holes with the heads thereof oriented to the stator base 42. Then, the female threads of the nuts 211 are screwed into the respective male threads of the bolts 210. Thus, the motor ASSY is integrated with the wheel unit 10.

According to the present embodiment described above, a drive wheel can be provided, with coaxiality of the rotor 30, race 80, and bearing 50 reduced. Thus, the detection unit 90 can be improved in detection accuracy.

<Sixth Embodiment>

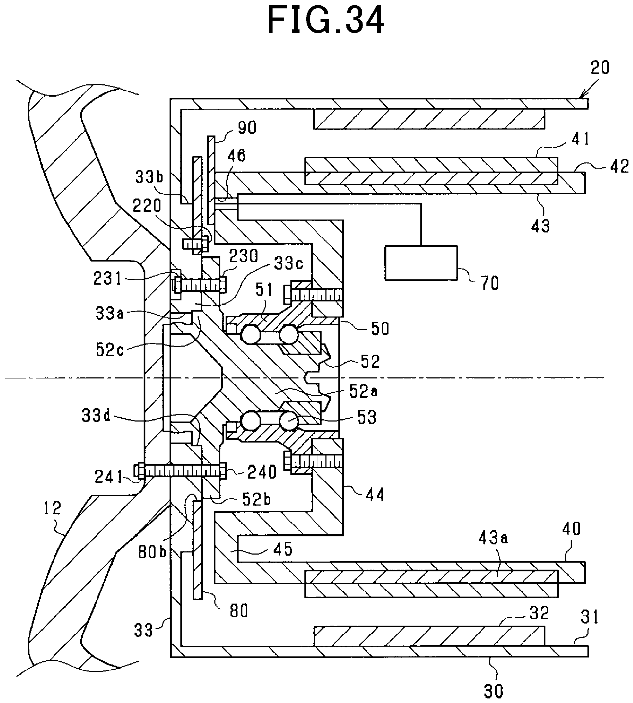

Referring to the drawings, a sixth embodiment will be described focusing on differences from the fifth embodiment. In the present embodiment, as shown in Fig. 34, the race 80 is fixed to the rotor 30, not to the inner ring 52. It should be noted that, in Fig. 34, the components or corresponding components that are the same as the components shown in Fig. 33, etc. are given the same reference signs for the sake of convenience.

With the flat surface of the race 80 abutting against the flat surface of the step 33b, the positioning part 33c is fitted to the through hole 80b of the race 80. In this state, the race 80 and the step 33b are fixed together by bolts 220.

The flat plate 33 and the flange 52b have a first through hole penetrating therethrough in the axial direction. Multiple first through holes are formed, being aligned in the circumferential direction (e.g., aligned at equal intervals in the circumferential direction). Bolts 230 are inserted into the respective first through holes. Each of the bolts 230 is inserted into the corresponding one of the first through holes with the head thereof oriented inward and with the shaft thereof oriented outward in the vehicle width direction. In this inserted state, the male thread of each of the bolts 230 is screwed into the female thread of the corresponding one of nuts 231. Thus, the flat plate 33 and the flange 52b in an overlapped state are sandwiched between the heads of the bolts 200 and the nuts 231. As a result, the rotor 30, race 80, and bearing 50 are integrated.

The flat plate 33, flange 52b, and disk 12 have a second through hole penetrating therethrough in the axial direction. Multiple second through holes are formed, being aligned in the circumferential direction (e.g., aligned at equal intervals in the circumferential direction) at positions radially shifted from the positions where the first through holes are formed. Bolts 240 are inserted into the respective second through holes. Each of the bolts 240 is inserted into the corresponding one of the second through holes with the head thereof oriented inward and with the shaft thereof oriented outward in the vehicle width direction. In this inserted state, the male thread of each of the bolts 240 is screwed into the female thread of the corresponding one of nuts 241. Thus, the flat plate 33, flange 52b, and disk 12 in an overlapped state are sandwiched between the heads of the bolts 240 and the nuts 241. As a result, the rotor 30 and the wheel unit 10 are integrated.

<Seventh Embodiment>

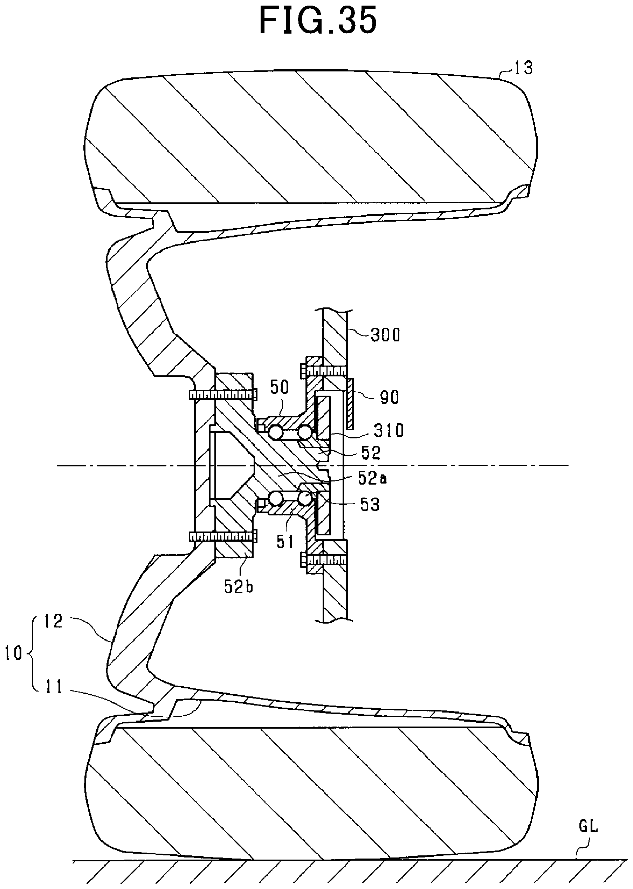

Referring to the drawings, a seventh embodiment will be described focusing on differences from the first embodiment. In the present embodiment, as shown in Fig. 35, no in-wheel motor is provided in the inner space of the wheel unit 10. The on-board moto provided to the vehicle body, for example, serves as a motor. It should be noted that, in Fig. 35, the components or corresponding components that are the same as the components shown in Fig. 1, etc. are given the same reference signs for the sake of convenience.

The wheels are mounted to the vehicle body via a suspension system. The suspension system includes a knuckle 300 (corresponding to the base). The knuckle 300 has a through hole penetrating therethrough in the vehicle width direction. The outer ring 51 of the bearing 50 is fixed to the knuckle 300 via bolts. The through hole of the knuckle 300 and the central axis LCo of the outer ring 51 are coaxial.

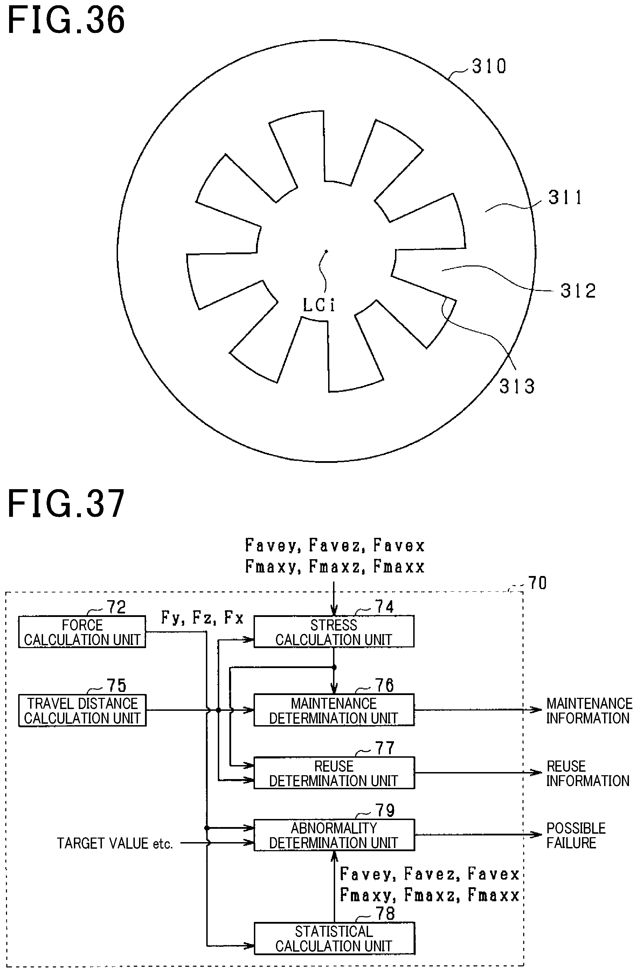

A race 310 is fixed to the inner end of the outer ring 51 in the vehicle width direction. When the knuckle 300 is viewed from inside in the vehicle width direction, the race 310 is visible via the through hole of the knuckle 300. As shown in Fig. 36, the race 310 has a disk-like shape and is made of a metal material (e.g., iron or aluminum). The race 310 includes an annular portion 311 and shields 312 extending radially inward from the annular portion 311. A plurality of shields 312 are provided at equal intervals in the circumferential direction. Thus, the shields 312, as metal portions, and cutouts 313 penetrating the race 310 in the plate thickness direction are alternately formed in the circumferential direction. In the present embodiment, the circumferential length of each shield 312 is equal to the circumferential length of each cutout 313.

As shown in Fig. 35, the detection unit 90 is attached to the knuckle 300. The first and second receiving coils 110 and 120 of the detection unit 90 are disposed so as to face the shields 312 and the cutouts 313 of the race 310 in the axial direction.

According to the present embodiment described above, advantages similar to those of the first embodiment can be achieved.

<Eighth Embodiment>

Referring to the drawings, an eighth embodiment will be described focusing on differences from the embodiments described above. The processor 70 of the present embodiment performs maintenance and management processing for the vehicle based on the calculated load acting on the wheel. Fig. 37 is a functional block diagram of the maintenance and management processing. The processor 70 is mainly constituted of a microcomputer, and the microcomputer includes a CPU. The functions of the microcomputer can be provided by software recorded on a tangible memory device and a computer executing the software, software alone, hardware alone, or a combination of these. For example, if the microcomputer is provided in the form of electronic circuits as hardware components, the electronic circuits can be provided by digital circuits including a number of logic circuits, or by analog circuits. For example, the microcomputer executes programs stored in a non-transitory tangible storage medium serving as a storage unit included in the microcomputer. The programs include those for maintenance and management processing, electrical angle calculation processing, wheel rotational speed calculation processing, and load calculation processing. With these programs executed, methods corresponding to the programs are executed. The storage unit is a non-volatile memory, for example. The programs stored in the storage unit can be updated via a communication network such as the internet, e.g., over the air (OTA).

The force calculation unit 72 of the present embodiment calculates a lateral force Fy, vertical load Fz, and longitudinal load Fx. Therefore, the detection unit 90 includes the configuration, for example, of the first or fourth embodiment.

A travel distance calculation unit 75 calculates a travel distance of the vehicle. In detail, the travel distance calculation unit 75 calculates a travel distance for each trip or a total travel distance. One trip is, for example, a period from when the vehicle has started traveling after the user enters the vehicle until when the user parks the vehicle. The total travel distance is a distance traveled since the vehicle was manufactured until the present. The travel distance calculation unit 75 may calculate a travel distance based on the rotational speed of the wheel, for example, calculated by the angle calculation unit 73.

The processor 70 calculates an accumulated stress acting on the wheel, and performs maintenance and management processing for the vehicle based on the calculated accumulated stress. For this purpose, the processor 70 includes a statistical calculation unit 78 and a stress calculation unit 74. The accumulated stress tends to increase as the total travel distance increases or the load increases. Therefore, the accumulated stress is a parameter associated with the degree of deterioration of the vehicle components.

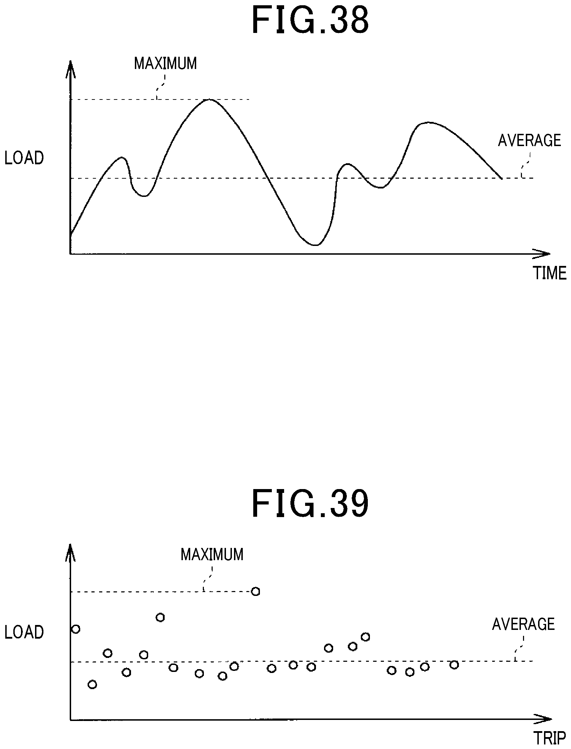

The statistical calculation unit 78 calculates time average values Favey, Favez and Favex, and maximum values Fmaxy, Fmaxz and Fmaxx of the lateral force Fy, vertical load Fz, and longitudinal load Fx. The time average values and the maximum values are calculated, as shown in Fig. 38, based on the load calculated from when the vehicle was manufactured until the present. The processing described below uses the lateral force Fy, vertical load Fz, and longitudinal load Fx but, for convenience of explanation, the vertical load Fz will be taken as an example in the following description.

The stress calculation unit 74 calculates an accumulated stress based on the total travel distance calculated by the travel distance calculation unit 75 and an average load Favez and a maximum load Fmaxz calculated by the statistical calculation unit 78. For example, the stress calculation unit 74 may calculate an accumulated stress based on the following equation. In the following equation, Kb, Km and Ka are positive coefficients.

$$\text{Accumulated stress} = Kb \times \text{total travel distance} \times (Km \times Fmaxz + Ka \times Favez)$$

Every time the calculated accumulated stress is determined to have exceeded each determination threshold, the maintenance determination unit 76 notifies the vehicle driver, the vehicle manager, the vehicle maintenance company, and the vehicle manufacturer of the need to replace the vehicle component. The driver may be notified by, for example, a navigation device. Notifications to the manager, maintenance company, and vehicle manufacturer may be sent, for example, to the communication terminals of the manager, maintenance company, and vehicle manufacturer via a communication network.

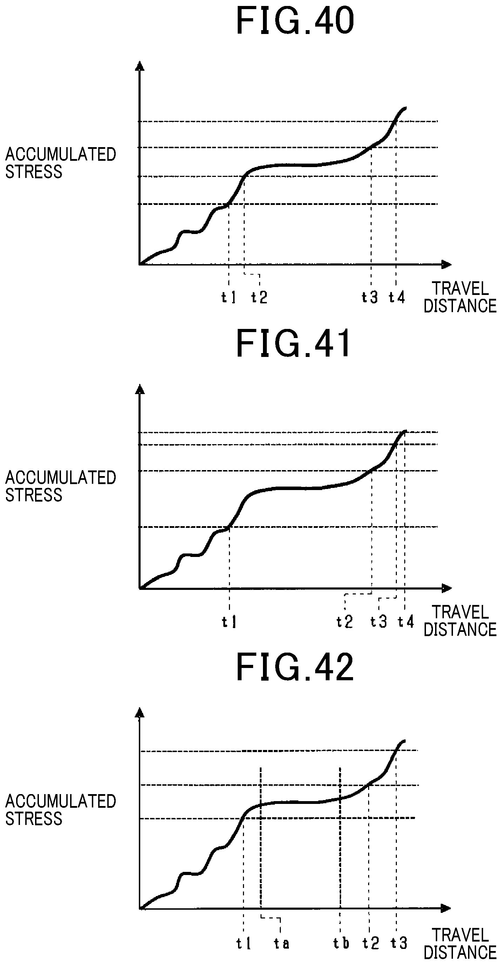

As shown in Fig. 40, a plurality determination thresholds are set. In the example shown in Fig. 40, the intervals between adjacent determination thresholds are equal to each other. In the example shown in Fig. 40, the accumulated stress exceeds the first determination threshold at time 11, and notification processing is performed. Furthermore, the accumulated stress exceeds the second, third and fourth determination thresholds at times t2, t3 and t4, and notification processing is performed.

According to the notification processing, stress on a vehicle component (e.g., undercarriage parts such as tires 13) can be detected with high accuracy, and the driver can be prompted to replace the parts. As a result, vehicle failures occurring while the driver is in the vehicle can be reduced. In addition, due to issuance of a maintenance notification every time the accumulated stress exceeds the determination threshold, it is no longer necessary to perform maintenance more than necessary, thereby reducing cost required for vehicle maintenance.

As shown in Fig. 41, the interval between the determination thresholds may be set to be smaller as the accumulated stress increases. The longer the total travel distance, the greater the degree of deterioration of the vehicle components tends to be. Therefore, according to the setting method shown in Fig. 41, the frequency of notification processing can be increased in the case where the total travel distance increases and component failures are likely to occur. As a result, the driver can be appropriately prompted to have the vehicle repaired.

The maintenance determination unit 76 may perform notification processing not only when it determines that the accumulated stress has exceeded the determination threshold, but also when it determines that the total travel distance has exceeded the determination distance, as shown in Fig. 42. In the example shown in Fig. 42, notification processing is performed at times ta and tb at which the total travel distance is determined to have exceeded the first and second determination distances, in addition to times 11, t2 and t3 at which the accumulated stress is determined to have exceeded the determination thresholds.

The maximum load used for calculating the accumulated stress may be the largest one of the maximum loads calculated in individual trips. The maximum value shown in Fig. 39 is the largest one of the maximum loads calculated in individual trips. The average load used for calculating the accumulated stress may be an average of the average loads calculated in individual trips.

Referring back to Fig. 37, a reuse determination unit 77 constituting the processor 70 determines whether the vehicle can be reused as a used car based on the accumulated stress, and also determines whether the vehicle components can be reused as used parts. If it is determined that the vehicle or the vehicle components are reusable, the reuse determination unit 77 determines reuse values of the vehicle or the vehicle components.

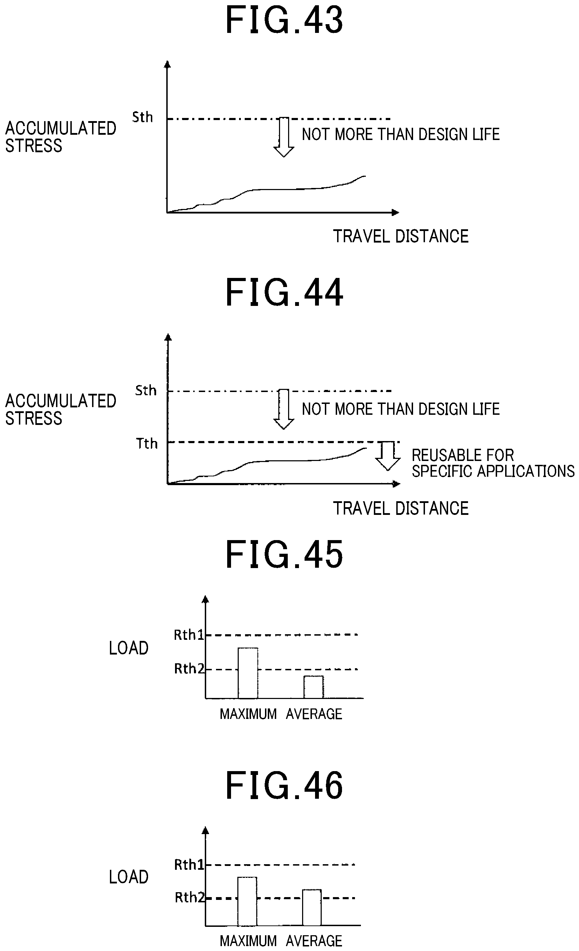

As shown in Fig. 43, if the accumulated stress is determined to be smaller than or equal to a tolerance threshold Sth, the reuse determination unit 77 determines that the components are reusable. The tolerance threshold Sth is set based on the design life of the vehicle or the components. The tolerance threshold Sth may be set for each vehicle or each component. If the accumulated stress is determined to have exceeded the tolerance threshold Sth, the reuse determination unit 77 determines that the components are not reusable.

If the accumulated stress is determined to be smaller than or equal to the tolerance threshold Sth, the reuse determination unit 77 determines that the smaller the accumulated stress is with respect to the tolerance threshold Sth, the higher the reuse values (e.g., selling prices) of the components. Information on the determination result is displayed, for example, on the display unit of the vehicle (e.g., the display of a navigation device) or on the display unit of the communication terminal of the manager, etc. Thus, the reuse values of the components or the vehicle can be easily estimated.

As shown in Fig. 44, if the accumulated stress is determined to be smaller than or equal to a threshold Tth which is smaller than the tolerance threshold Sth, the reuse determination unit 77 determines that the components are reusable for specific applications. This is a method for determining, for example, that the components to be reused have relatively small degrees of deterioration.

As shown in Figs. 45 and 46, the reuse determination unit 77 may determine reusability of the components by comparing a first reuse determination value Rth1 and a second reuse determination value Rth2 with the maximum load and the average load. In the example shown in Fig. 45, the reuse determination unit 77 determines that maximum load $\leq$ Rth1, and average load $\leq$ Rth2. In the example shown in Fig. 46, the reuse determination unit 77 determines that maximum load $\leq$ Rth1, and average load > Rth2. The determination shown in Fig. 45 can be information, for example, that the components are determined to be reusable on condition that the usage of the components at the reuse destinations are not stricter than the current usage. On the other hand, the determination shown in Fig. 44 can be information, for example, that the components are determined to be components with relatively small degrees of deterioration as components to be reused. Reuse determination processing has been described above, but the determination method or the thresholds may be appropriately determined depending on the applications, etc. at the reuse destinations.

Referring back to Fig. 37, an abnormality determination unit 79 constituting the processor 70 determines whether the vehicle has a possible failure based on the load calculated by the force calculation unit 72 and the average load calculated by the statistical calculation unit 78. The abnormality determination unit 79 may determine that the vehicle has a possible failure when, for example, it is determined that load > E × average load. Herein, E represents a positive coefficient. The coefficient E may be set for each of the lateral force Fy, vertical load Fz, and longitudinal load Fx.

If it is determined that the vehicle has a possible failure, the abnormality determination unit 79 notifies the vehicle driver, vehicle manager, vehicle maintenance company, and vehicle manufacturer of the possible failure. According to the processing performed by the abnormality determination unit 79, the vehicle possible failure can be detected in advance.

The abnormality determination unit 79 may determine whether there is a vehicle possible failure based on a control target value related to the vehicle travelling and the load calculated by the force calculation unit 72. In detail, if the deviation between the calculated load and the load, which is assumed when the actual control value related to the vehicle travelling is the control target value, is determined to exceed a predetermined amount, the abnormality determination unit 79 determines that the vehicle has a possible failure. Herein, examples of the control target value include the following items (A) to (C).

(A) A target steering angle of the wheels (steered wheels) based on the driver's steering wheel operation amount, or a target steering angle calculated by an automated driving control device, etc. of the vehicle.
(B) A target braking force applied to the wheels based on the driver's brake pedal depression amount, or a target braking force applied to the wheels calculated by an automated driving control device, etc.
(C) A target drive power of the vehicle based on the driver's accelerator pedal depression amount, or a target drive power of the vehicle calculated by an automated driving control device, etc.

In the present embodiment, each component shown in Fig. 37 corresponds to the management section.

According to the present embodiment described above, vehicle maintenance and management can be carried out properly.

<Ninth Embodiment>

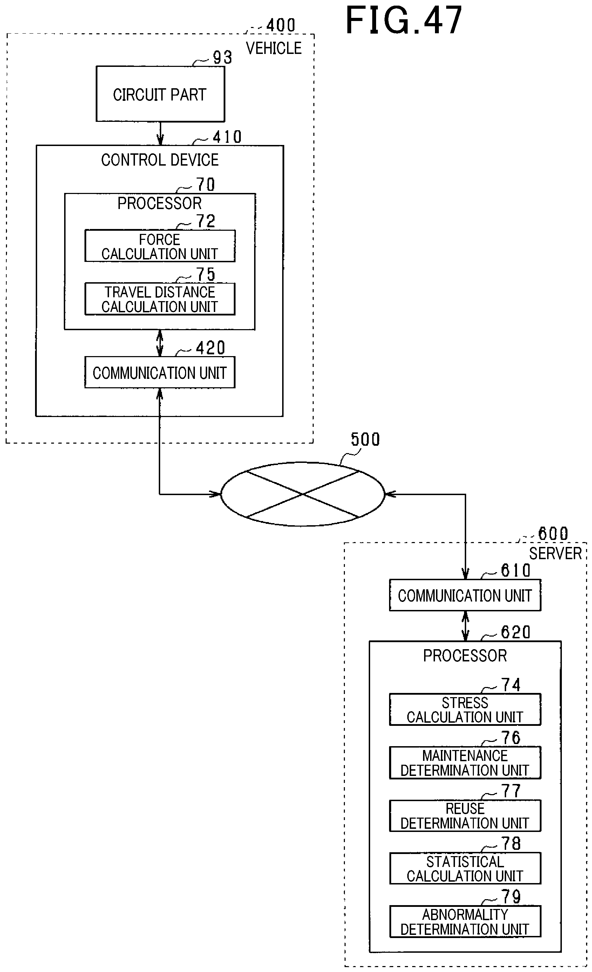

Referring to the drawings, a ninth embodiment will be described focusing on differences from the eighth embodiment. In the present embodiment, as shown in Fig. 47, part of the maintenance and management processing is performed by a server 600 installed outside a vehicle 400. It should be noted that, in Fig. 47, the components or corresponding components that are the same as the components shown in Fig. 37, etc. are given the same reference signs for the sake of convenience.

The vehicle 400 includes a control device 410. The control device 410 is mainly constituted of a microcomputer. The control device 410 includes a processor 70 and a vehicle-side communication unit 420. The vehicle-side communication unit 420 exchanges information with a server-side communication unit 610 included in the server 600 via a communication network 500 such as the internet. The processor 70 includes a force calculation unit 72 and a travel distance calculation unit 75. The stress calculation unit 74, maintenance determination unit 76, reuse determination unit 77, statistical calculation unit 78, and abnormality determination unit 79 are not provided to the control device 410 on the vehicle 400 side, but are provided to a processor 620 of the server 600. Information such as the load and the total travel distance calculated in the control device 410 is transmitted to the server 600 via the vehicle-side communication unit 420, communication network 500, and server-side communication unit 610.

The server 600 is mainly constituted of a microcomputer, and the microcomputer includes a CPU. The functions of the microcomputer can be provided by software recorded on a tangible memory device and a computer executing the software, software alone, hardware alone, or a combination of these. For example, if the microcomputer is provided in the form of electronic circuits as hardware components, the electronic circuits can be provided by digital circuits including a number of logic circuits, or by analog circuits. For example, the microcomputer executes programs stored in a non-transitory tangible storage medium serving as a storage unit included in the microcomputer. The programs include programs for maintenance and management processing, etc. With these programs executed, methods corresponding to the programs are executed. The programs stored in the storage unit can be updated via a communication network such as the internet, e.g., over the air (OTA).

Every time the calculated accumulated stress is determined to have exceeded each determination threshold, the maintenance determination unit 76 constituting the processor 620 notifies the vehicle driver, vehicle manager, vehicle maintenance company, and vehicle manufacturer of the need to replace the vehicle component. Notification to the driver, vehicle manager, vehicle maintenance company, and vehicle manufacturer is performed via the server-side communication unit 610 and the communication network 500.

The reuse determination unit 77 notifies the vehicle driver, vehicle manager, vehicle maintenance company, and vehicle manufacturer of information related to reuse described in the eighth embodiment. If it is determined that the vehicle has a possible failure, the abnormality determination unit 79 notifies the vehicle driver, vehicle manager, vehicle maintenance company, and vehicle manufacturer of the possible failure.

In this way, part of the maintenance and management processing can also be performed on the server 600 side instead of the vehicle 400 side.

<Other Embodiments>

The embodiments described above may be modified and implemented as follows.

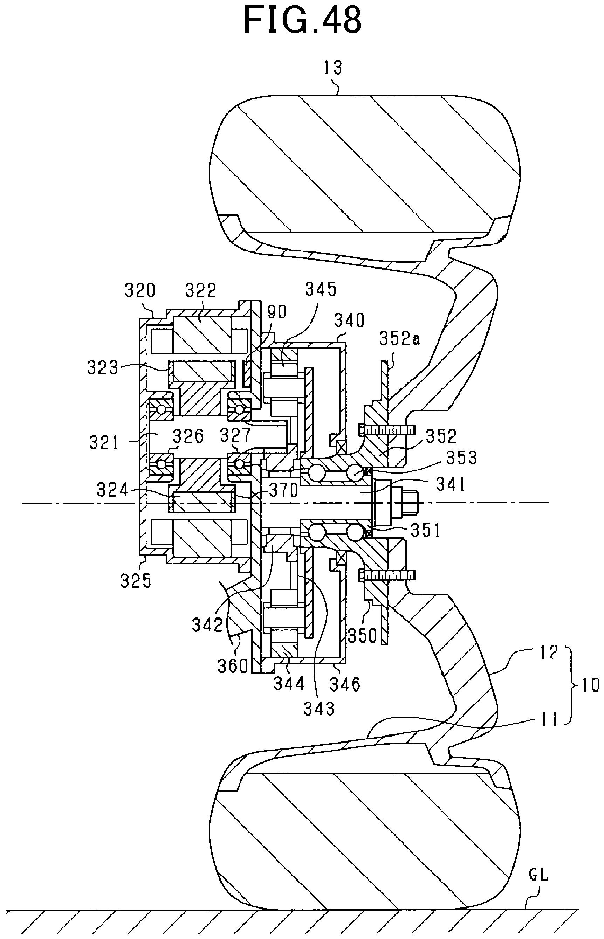

The bearing rotatably supporting the wheel unit 10 does not have to be coaxial with the motor. Also, at least part of the motor may be disposed outside the inner space of the wheel unit 10. An example of a wheel in this case is shown in Fig. 48. It should be noted that, in Fig. 48, the components or corresponding components that are the same as the components shown in Fig. 1, etc. are given the same reference signs for the sake of convenience.

The wheel includes a motor 320 and a deceleration device 340. The torque of the motor 320 is transmitted to the wheel unit 10 via the deceleration device 340. The motor 320 has a rotary shaft 321 which is offset upward with respect to the central axis of a bearing 350 rotatably supporting the wheel unit 10. The motor 320 is an inner-rotor type motor including a stator 322 and a rotor 323 disposed radially inside the stator 322. The rotor 323 is provided with a magnet unit 324. The rotary shaft 321 provided to the rotor 323 is rotatably supported by bearings 326 and 327 provided to a motor housing 325. The rotary shaft 321 has a tip at which external teeth are formed. The motor housing 325 is fixed to a knuckle 360.

The deceleration device 340 is a device including a planetary gear mechanism. The deceleration device 340 includes a drive shaft 341 and a sun gear 342 provided to an end of the drive shaft 341. The sun gear 342 has external teeth engaged with the external teeth of the rotary shaft 321. The diameter of the sun gear 342 is larger than that of the rotary shaft 321, and the number of teeth of the sun gear 342 is larger than that of the rotary shaft 321. The drive shaft 341 is fixed to an inner ring 351 constituting the bearing 350. The drive shaft 341 and the inner ring 351 have a coaxial central axis. The bearing 350 includes an outer ring 352 and a plurality of rolling elements 353 disposed between the outer ring 352 and the inner ring 351. The outer ring 352 has a flange 352a fixed to the disk 12 via bolts.

The deceleration device 340 includes a carrier 343, a ring gear 344, and a plurality of pinion gears 345. The carrier 343 is fixed to the outer ring 352 of the bearing 350 and rotates integrally with the outer ring 352. The central axis of the carrier 343 and that of the outer ring 352 are coaxial. The carrier 343 rotatably supports the pinion gear 345 and is configured to rotate with the rotation of the sun gear 342. The pinion gears 345 have external teeth engaged with the internal teeth of the ring gear 344. The ring gear 344 is fixed to a casing 346 which is fixed to the knuckle 360.

The rotor 323 has an axial end at which a disk-shaped race 370 is provided. The race 370 may have any of the various configurations described in the above embodiments. The rotor 323 and the race 370 rotate integrally. In the motor housing 325, a detection unit 90 is provided at a position axially opposite to the race 370.

In the configuration shown in Fig. 48, the force calculation unit 72 may calculate a load acting on the rotary shaft 321 of the motor 320, i.e., a load acting in the direction in which the rotary shaft 321 extends (axial direction), instead of the lateral force Fy. Moreover, the force calculation unit 72 may calculate a vertical load acting on the rotary shaft 321, instead of the vertical load Fz. In this case, the load acting on the rotary shaft 321 may be calculated using map information or formula information, as in the configurations described in the above embodiments.

In the first to third, fifth and sixth embodiments, the detection unit 90 may be provided at a position facing the lower end of the race 80 in the axial direction. In addition, the detection unit 90 may be disposed on the disk 12 side with respect to the race 80.

The cutouts 82 in Fig. 2, the openings 84 in Fig. 24, or the cutouts 313 in Fig. 36 may be provided witn non-metal portions made of a synthetic resin or the like. This can achieve a configuration in which metal portions and non-metal portions are alternately provided in the circumferential direction in the race, and thus a rotational angle can be detected in the same manner as in the first embodiment, etc.

The in-wheel motor 20 shown in Fig. 1 does not have to include the race 80. In this case, for example, the flat plate portion 33 of the in-wheel motor 20 may be provided with shields and openings, or concavities and convexities, which are formed alternately in the circumferential direction, in portions thereof facing the coil part 92 in the axial direction. In this case, the flat plate 33 corresponds to the rotation section for detection.

In the first, second, fifth and sixth embodiments, only a single receiving coil may be formed on the substrate 91.

The bearing is not limited to the bearing in which the outer ring 51 is fixed to the stator base 42 and the inner ring 52 is fixed to the wheel unit 10, but may be a bearing in which the outer ring is fixed to the wheel unit 10 and the inner ring is fixed to the stator base 42. In this case, the inner ring corresponds to the first bearing member, and the outer ring corresponds to the second bearing member.

The motor is not limited to an outer-rotor type, but may be an inner-rotor type.

The control unit and the processes thereof described in the present disclosure may be implemented by a dedicated computer which is provided by configuring a processor and a memory which are programmed to perform one or more embodied functions. Alternatively, the control unit and the processes thereof described in the present disclosure may be implemented by a dedicated computer which is provided by configuring a processor with one or more dedicated hardware logic circuits. Alternatively, the control unit and the processes thereof described in the present disclosure may be implemented by one or more dedicated computers which are configured by combining a processor and a memory which are programmed to perform one or more functions, with a processor which is configured by one or more hardware logic circuits. Furthermore, the computer program may be stored in a computer readable non-transitory tangible recording medium, as instructions to be executed by the computer.

Characteristic configurations selected from the embodiments described above are provided below.

[Configuration 1]

A vehicular device applied to a vehicle, including

a bearing (50, 350) rotatably supporting a wheel of the vehicle with respect to a vehicle body of the vehicle;
an annular detection target (81, 82, 84, 85, 87, 88, 310, 370) extending in a circumferential direction of the bearing;
a planar receiving coil (110, 120, 130, 140, 150) extending in a direction intersecting an axial direction of the bearing, the planar receiving coil being fixed to the vehicle body and provided at a position facing the detection target in the axial direction, the planar receiving coil being in a state of not contacting the detection target; and
an excitation coil (100) to which an AC excitation voltage is supplied, wherein,
the detection target is provided to rotate with rotation of the wheel;
the detection target includes at least one of

a configuration in which at least one metal portion (81, 312) and at least one portion (82, 313) penetrating in the axial direction of the bearing are alternately provided in the circumferential direction,
a configuration in which at least one concavity (88) recessed in the axial direction and at least one convexity (87) protruding in the axial direction relative to the at least one concavity are alternately provided in the circumferential direction, or
a configuration in which at least one metal portion and at least one non-metal portion are alternately provided in the circumferential direction;

a voltage is induced in the receiving coil when the excitation voltage is supplied to the excitation coil; and
the vehicular device includes a parameter calculation section (72, 73) calculating a rotational speed of the wheel based on an output voltage signal from the receiving coil.

[Configuration 2]

The vehicular device according to Configuration 1, including

a motor (20, 320) serving as a driving power source of the vehicle, wherein
the motor includes a rotor (30) including a magnet unit (32) forming multiple magnetic poles with polarities alternating in a circumferential direction; and
the parameter calculation section further calculates a rotational angle of the rotor based on the output voltage signal from the receiving coil.

[Configuration 3]

The vehicular device according to Configuration 1 or 2, wherein

while the excitation voltage is supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and
the parameter calculation section further calculates a load acting on the wheel based on the output voltage signal from the receiving coil.

[Configuration 4]

The vehicular device according to Configuration 1, wherein

the vehicular device includes a motor (320) serving as a driving power source of the vehicle;

while the excitation voltage is supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and

the parameter calculation section further calculates a load acting on a rotary shaft (321) of the motor based on the output voltage signal from the receiving coil.

[Configuration 5]

The vehicular device according to Configuration 3 or 4, further including a management section (74 to 79) performing processing associated with maintenance and management of the vehicle based on the calculated load.

[Configuration 6]

The vehicular device according to Configuration 5, wherein
as the processing associated with maintenance and management, the management section performs

processing (74) for calculating an accumulated stress acting on the wheel based on the calculated load, and processing (76) for notifying information indicating that the vehicle should be maintained, based on the calculated accumulated stress.

[Configuration 7]

The vehicular device according to Configuration 5, wherein
as the processing associated with maintenance and management, the management section performs
processing (79) for determining whether the vehicle has a possible failure, based on the calculated load.

[Configuration 8]

The vehicular device according to Configuration 5, wherein
as the processing associated with maintenance and management, the management section performs

processing (74) for calculating an accumulated stress acting on the wheel based on the calculated load, and processing (77) for determining whether the vehicle or a component of the vehicle is reusable, based on the calculated accumulated stress.

[Configuration 9]

The vehicular device according to Configuration 8, wherein, when the management section determines that the vehicle or the component of the vehicle is reusable, the management section performs processing (74) for determining a reuse value of the vehicle or the component of the vehicle, based on the calculated accumulated stress.

[Configuration 10]

The vehicular device according to Configuration 5, wherein
as the processing associated with maintenance and management, the management section performs

processing (74) for calculating an accumulated stress acting on the wheel based on the calculated load, and processing (76) for determining time of replacing the component of the vehicle, based on the calculated accumulated stress.

[Configuration 11]

The vehicular device according to any one of Configurations 1 to 10, wherein

the bearing (50) includes an outer ring member (51), an inner ring member (52), and rolling elements (53) provided between the outer ring member and the inner ring member, the bearing (50) rotatably supporting the wheel relative to a base (42) fixed to the vehicle body;

the bearing, the detection target, and the excitation coil are provided in an inner space of a wheel unit (10) configuring the wheel;

the receiving coil is fixed to the base in the inner space;

a first bearing member (52), that is one of the outer ring member and the inner ring member, is fixed to the wheel, and a second bearing member (51), that is the other of the outer ring member and the inner ring member, is fixed to the base; and

the detection target is provided so as to rotate integrally with the first bearing member.

**Claims**

1. A vehicular device applied to a vehicle, comprising

    a bearing (50, 350) rotatably supporting a wheel of the vehicle with respect to a vehicle body of the vehicle;
    an annular detection target (81, 82, 84, 85, 87, 88, 310, 370) extending in a circumferential direction of the bearing;
    a planar receiving coil (110, 120, 130, 140, 150) extending in a direction intersecting an axial direction of the bearing, the planar receiving coil being fixed to the vehicle body and provided at a position facing the detection target in the axial direction, the planar receiving coil being in a state of not contacting the detection target; and
    an excitation coil (100) to which an AC excitation voltage is supplied, wherein,
    the detection target is provided to rotate with rotation of the wheel;
    the detection target includes at least one of

        a configuration in which at least one metal portion (81, 312) and at least one portion (82, 313) penetrating in the axial direction of the bearing are alternately provided in the circumferential direction,
        a configuration in which at least one concavity (88) recessed in the axial direction and at least one convexity (87) protruding in the axial direction relative to the at least one concavity are alternately provided in the circumferential direction, or
        a configuration in which at least one metal portion and at least one non-metal portion are alternately provided in the circumferential direction;

    a voltage is induced in the receiving coil in response to the excitation voltage being supplied to the excitation coil; and
    the vehicular device includes a parameter calculation section (72, 73) calculating a rotational speed of the wheel based on an output voltage signal from the receiving coil.

2. The vehicular device according to claim 1, further comprising

    a motor (20, 320) serving as a driving power source of the vehicle, wherein
    the motor includes a rotor (30) including a magnet unit (32) forming multiple magnetic poles with polarities alternating in a circumferential direction; and
    the parameter calculation section further calculates a rotational angle of the rotor based on the output voltage signal from the receiving coil.

3. The vehicular device according to claim 1 or 2, wherein

    in response to the excitation voltage being supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and
    the parameter calculation section further calculates a load acting on the wheel based on the output voltage signal from the receiving coil.

4. The vehicular device according to claim 1, wherein

    the vehicular device includes a motor (320) serving as a driving power source of the vehicle;
    in response to the excitation voltage being supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and
the parameter calculation section further calculates a load acting on a rotary shaft (321) of the motor based on the output voltage signal from the receiving coil.

5. The vehicular device according to claim 3, further comprising a management section (74 to 79) performing processing associated with maintenance and management of the vehicle based on the calculated load.

6. The vehicular device according to claim 5, wherein
as the processing associated with maintenance and management, the management section performs

processing (74) for calculating an accumulated stress acting on the wheel based on the calculated load, and
processing (76) for notifying information indicating that the vehicle should be maintained, based on the calculated accumulated stress.

7. The vehicular device according to claim 5, wherein
as the processing associated with maintenance and management, the management section performs
processing (79) for determining whether the vehicle has a possible failure, based on the calculated load.

8. The vehicular device according to claim 5, wherein
as the processing associated with maintenance and management, the management section performs

processing (74) for calculating an accumulated stress acting on the wheel based on the calculated load, and
processing (77) for determining whether the vehicle or a component of the vehicle is reusable, based on the calculated accumulated stress.

9. The vehicular device according to claim 8, wherein, in response to determining that the vehicle or the component of the vehicle is reusable, the management section performs processing (74) for determining a reuse value of the vehicle or the component of the vehicle, based on the calculated accumulated stress.

10. The vehicular device according to claim 5, wherein
as the processing associated with maintenance and management, the management section performs

processing (74) for calculating an accumulated stress acting on the wheel based on the calculated load, and
processing (76) for determining time of replacing the component of the vehicle, based on the calculated accumulated stress.

11. The vehicular device according to any one of claims 1, 2 and 4, wherein

the bearing (50) includes an outer ring member (51), an inner ring member (52), and a rolling element (53) provided between the outer ring member and the inner ring member, the bearing (50) rotatably supporting the wheel relative to a base (42) fixed to the vehicle body;
the bearing, the detection target, and the excitation coil are provided in an inner space of a wheel unit (10) configuring the wheel;
the receiving coil is fixed to the base in the inner space;
a first bearing member (52), that is one of the outer ring member and the inner ring member, is fixed to the wheel, and a second bearing member (51), that is the other of the outer ring member and the inner ring member, is fixed to the base; and
the detection target is provided so as to rotate integrally with the first bearing member.

12. A program applied to a system, the system comprising

a bearing (50, 350) rotatably supporting a wheel of a vehicle with respect to a vehicle body of the vehicle;
an annular detection target (81, 82, 84, 85, 87, 88, 310, 370) extending in a circumferential direction of the bearing;
a planar receiving coil (110, 120, 130, 140, 150) extending in a direction intersecting an axial direction of the bearing, the planar receiving coil being fixed to the vehicle body and provided at a position facing the detection target in the axial direction, the planar receiving coil being in a state of not contacting the detection target;
an excitation coil (100) to which an AC excitation voltage is supplied; and
a computer (70, 410, 600), wherein,

the detection target is provided to rotate with rotation of the wheel;
the detection target includes at least one of

a configuration in which at least one metal portion (81, 312) and at least one portion (82, 313) penetrating in the axial direction of the bearing are alternately provided in the circumferential direction,
a configuration in which at least one concavity (88) recessed in the axial direction and at least one convexity (87) protruding in the axial direction relative to the at least one concavity are alternately provided in the circumferential direction, or
a configuration in which at least one metal portion and at least one non-metal portion are alternately provided in the circumferential direction;

in response to the excitation voltage being supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction; and
the program causes the computer to perform

processing for calculating a rotational speed of the wheel based on an output voltage signal from the receiving coil,
processing for calculating a load acting on the wheel based on an output voltage signal from the receiving coil, and
processing associated with maintenance and management of the vehicle based the calculated load.

13. A vehicular system, comprising a vehicular device installed to a vehicle (400), a control device (410) installed to the vehicle, and a server (600) capable of communicating with the control device via a communication network (500), wherein

the vehicular device includes

a bearing (50, 350) rotatably supporting a wheel of the vehicle with respect to a vehicle body of the vehicle,
an annular detection target (81, 82, 84, 85, 87, 88, 310, 370) extending in a circumferential direction of the bearing,
a planar receiving coil (110, 120, 130, 140, 150) extending in a direction intersecting an axial direction of the bearing, the planar receiving coil being fixed to the vehicle body and provided at a position facing the detection target in the axial direction, the planar receiving coil being in a state of not contacting the detection target, and
an excitation coil (100) to which an AC excitation voltage is supplied;

the detection target is provided to rotate with rotation of the wheel;
the detection target includes at least one of

a configuration in which at least one metal portion (81, 312) and at least one portion (82, 313) penetrating in the axial direction of the bearing are alternately provided in the circumferential direction,
a configuration in which at least one concavity (88) recessed in the axial direction and at least one convexity (87) protruding in the axial direction relative to the at least one concavity are alternately provided in the circumferential direction, or
a configuration in which at least one metal portion and at least one non-metal portion are alternately provided in the circumferential direction;

in response to the excitation voltage being supplied to the excitation coil, the receiving coil outputs a voltage signal corresponding to at least one of a displacement of the detection target in the axial direction, a displacement of the detection target in a direction orthogonal to the axial direction, and a displacement of the detection target in a vehicle longitudinal direction;
the control device performs

processing for calculating a rotational speed of the wheel based on an output voltage signal from the receiving coil,
processing for calculating a load acting on the wheel based on an output voltage signal from the receiving coil, and
processing for transmitting the calculated load to the server via the communication network; and

the server receives the load transmitted from the control device and performs processing associated with maintenance and management of the vehicle based on the received load.

# FIG.1

# FIG.2

# FIG.3

# FIG.4

# FIG.5

# FIG.6

# FIG.7A

# FIG.7B

# FIG.7C

# FIG.8

FIRST LAYER

VB1 VB7 101 VA7 VA1
VA5 VB4 125
VI 102
VB2 123 115 127 VB3 VA4 112
VA6 VB6 VA3
VB5
VA2

LCo

# FIG.9

SECOND LAYER 122 VB1 VB7 103 VA7 VA1 104
VA5 VI VB4
116 117 124 VB3 VA4 114 VA3
VB2 VB6 126 113
VA6 VB5
VA2

LCo

# FIG.10

THIRD LAYER

# FIG.11

FOURTH LAYER

# FIG.12

# FIG.13

$$v_e(t) \propto \frac{d\phi(t)}{dt}$$

# FIG.14

# FIG.15

# FIG.16

# FIG.17

# FIG.18

WHEN Fy ACTS ON

# FIG.19A

UPPER END OF RACE TILTED INWARD (OUTWARD Fy INCREASES)

# FIG.19B

UPPER END OF RACE TILTED OUTWARD (INWARD Fy INCREASES)

# FIG.20A

REFERENCE STATE

# FIG.20B

RACE IS DISPLACED UPWARD (UPWARD Fz INCREASES)

# FIG.20C

RACE IS DISPLACED DOWNWARD (DOWNWARD Fz INCREASES)

# FIG.21A

REFERENCE STATE

# FIG.21B

RACE IS DISPLACED UPWARD (UPWARD Fz INCREASES)

# FIG.21C

RACE IS DISPLACED DOWNWARD (DOWNWARD Fz INCREASES)

# FIG.22

WHEN Fz ACTS ON

SECOND RECEIVING COIL
(K2z[mV/μm])

[mV]

60

DISPLACEMENT
SIGNAL  0

FIRST RECEIVING COIL
(K1z[mV/μm])

-60

+50     0     -50

ΔZ[μm]

# FIG.23

| | | | Fz[N] | | | | | |
|---|---|---|---|---|---|---|---|---|
| | | ··· | −100 | | 0 | | 100 | ··· |
| | | | ΔZ[μm] | | | | | |
| | | ··· | −10 | | 0 | | 10 | ··· |
| Fy[N] | ΔY[μm] | ··· | FIRST[mV] | SECOND[mV] | FIRST[mV] | SECOND[mV] | FIRST[mV] | SECOND[mV] | ··· |
| ⋮ | ⋮ | ⋮ | ⋮ | ⋮ | ⋮ | ⋮ | ⋮ | ⋮ | ⋮ |
| −200 | −20 | ··· | 13.5 | 11.0 | 19.6 | 12.4 | 25.7 | 13.8 | ··· |
| −100 | −10 | ··· | 3.7 | 4.8 | 9.8 | 6.2 | 15.9 | 7.6 | ··· |
| 0 | 0 | ··· | −6.1 | −1.4 | 0 | 0 | 6.1 | 1.4 | ··· |
| 100 | 10 | ··· | −15.9 | −17.5 | −9.8 | −6.2 | −3.7 | −4.8 | ··· |
| 200 | 20 | ··· | −25.7 | −13.8 | −19.6 | −12.4 | −13.5 | −12.0 | ··· |
| ⋮ | ⋮ | ⋮ | ⋮ | ⋮ | ⋮ | ⋮ | ⋮ | ⋮ | ⋮ |

FIG.24

FIG.25

# FIG.26

# FIG.27

# FIG.28

# FIG.29A
REFERENCE STATE

81a  150A  150B  81
L1  L1

ts0  ES  ts0
0
tsa

⇩

# FIG.29B
REFERENCE STATE

150A  81a  150B  81
L1/2  L1  L1/2

ES
0
tsb

⇩

# FIG.29C
REFERENCE STATE

150A  81a  150B  81
L1  L1

ES
0
tsc

# FIG.30A
LATERAL FORCE APPLIED

# FIG.30B
LATERAL FORCE APPLIED

# FIG.30C
LATERAL FORCE APPLIED

# FIG.31A
VERTICAL LOAD APPLIED

# FIG.31B
VERTICAL LOAD APPLIED

# FIG.31C
VERTICAL LOAD APPLIED

# FIG.32

# FIG.33

# FIG.34

# FIG.35

# FIG.36

# FIG.37

Favey, Favez, Favex
Fmaxy, Fmaxz, Fmaxx

| | | 70 |
|---|---|---|
| 72 FORCE CALCULATION UNIT | Fy, Fz, Fx | 74 STRESS CALCULATION UNIT |
| 75 TRAVEL DISTANCE CALCULATION UNIT | | 76 MAINTENANCE DETERMINATION UNIT → MAINTENANCE INFORMATION |
| | | 77 REUSE DETERMINATION UNIT → REUSE INFORMATION |
| TARGET VALUE etc. | | 79 ABNORMALITY DETERMINATION UNIT → POSSIBLE FAILURE |
| | | Favey, Favez, Favex Fmaxy, Fmaxz, Fmaxx 78 STATISTICAL CALCULATION UNIT |

# FIG.38

# FIG.39

# FIG.40

ACCUMULATED STRESS

TRAVEL DISTANCE

t1  t2        t3  t4

# FIG.41

ACCUMULATED STRESS

TRAVEL DISTANCE

t1        t2  t3  t4

# FIG.42

ACCUMULATED STRESS

TRAVEL DISTANCE

t1  ta    tb  t2  t3

# FIG.43

ACCUMULATED STRESS

Sth ⟶ NOT MORE THAN DESIGN LIFE

TRAVEL DISTANCE

# FIG.44

ACCUMULATED STRESS

Sth ⟶ NOT MORE THAN DESIGN LIFE

Tth ⟶ REUSABLE FOR SPECIFIC APPLICATIONS

TRAVEL DISTANCE

# FIG.45

LOAD

Rth1
Rth2

MAXIMUM  AVERAGE

# FIG.46

LOAD

Rth1
Rth2

MAXIMUM  AVERAGE

# FIG.47

400 VEHICLE

93

CIRCUIT PART

410

CONTROL DEVICE

70

PROCESSOR

72

FORCE CALCULATION UNIT

75

TRAVEL DISTANCE CALCULATION UNIT

420

COMMUNICATION UNIT

500

600 SERVER

610

COMMUNICATION UNIT

620

PROCESSOR

74

STRESS CALCULATION UNIT

76

MAINTENANCE DETERMINATION UNIT

77

REUSE DETERMINATION UNIT

78

STATISTICAL CALCULATION UNIT

79

ABNORMALITY DETERMINATION UNIT

# FIG.48

## INTERNATIONAL SEARCH REPORT

| International application No. |
|---|
| **PCT/JP2023/008504** |

| | |
|---|---|
| **A. CLASSIFICATION OF SUBJECT MATTER** | |
| ***G01P 3/44***(2006.01)i; ***G01P 3/48***(2006.01)i<br>FI: G01P3/44 B; G01P3/48 Z | |
| According to International Patent Classification (IPC) or to both national classification and IPC | |

| | |
|---|---|
| **B. FIELDS SEARCHED** | |
| Minimum documentation searched (classification system followed by classification symbols) | |
| G01P3/00-3/80; G01D5/00-5/252; G01D5/39-5/62; G01B7/00-7/34; G01L5/00-5/28; B60B35/02-35/10; F16C19/00-19/56; F16C41/00-41/04 | |
| Documentation searched other than minimum documentation to the extent that such documents are included in the fields searched | |
| Published examined utility model applications of Japan 1922-1996<br>Published unexamined utility model applications of Japan 1971-2023<br>Registered utility model specifications of Japan 1996-2023<br>Published registered utility model applications of Japan 1994-2023 | |
| Electronic data base consulted during the international search (name of data base and, where practicable, search terms used) | |
| | |

**C. DOCUMENTS CONSIDERED TO BE RELEVANT**

| Category* | Citation of document, with indication, where appropriate, of the relevant passages | Relevant to claim No. |
|---|---|---|
| X | JP 2018-508759 A (HUTCHINSON) 29 March 2018 (2018-03-29)<br>paragraphs [0002], [0019]-[0021], [0038]-[0053], [0206]-[0243], fig. 3A-3B, 5, 28-30 | 1-2, 11 |
| A | US 2021/0063206 A1 (INFINEON TECHNOLOGIES AG) 04 March 2021 (2021-03-04)<br>entire text, all drawings | 1-13 |
| A | US 4631510 A (POWERTON, DIVISION OF CONTRAVES GOERZ CORPORATION) 23 December 1986 (1986-12-23)<br>entire text, all drawings | 1-13 |
| A | US 2008/0144985 A1 (THE TIMKEN COMPANY) 19 June 2008 (2008-06-19)<br>entire text, all drawings | 1-13 |

| ☐ Further documents are listed in the continuation of Box C. | ☑ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/008504**

| Patent document cited in search report | | | Publication date (day/month/year) | Patent family member(s) | | | Publication date (day/month/year) |
|---|---|---|---|---|---|---|---|
| JP | 2018-508759 | A | 29 March 2018 | BR | 112017014936 | A2 | |
| | | | | CA | 2973053 | A1 | |
| | | | | CN | 107407692 | A | |
| | | | | DK | 3245485 | T3 | |
| | | | | EP | 3245485 | A1 | |
| | | | | ES | 2817124 | T3 | |
| | | | | FR | 3031589 | A1 | |
| | | | | HK | 1245392 | A1 | |
| | | | | KR | 10-2017-0118725 | A | |
| | | | | MX | 2017009158 | A | |
| | | | | US | 2018/0274591 | A1 | |
| | | | | paragraphs [0002], [0059]-[0061], [0078]-[0093], [0272]-[0318], fig. 3A-3B, 5, 28-30 | | | |
| US | 2021/0063206 | A1 | 04 March 2021 | CN | 112444191 | A | |
| | | | | DE | 102019213174 | B3 | |
| US | 4631510 | A | 23 December 1986 | (Family: none) | | | |
| US | 2008/0144985 | A1 | 19 June 2008 | EP | 2097275 | A1 | |
| | | | | WO | 2008/076811 | A1 | |

Form PCT/ISA/210 (patent family annex) (January 2015)

**EP 4 492 069 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022034713 A
- JP 2900001 B
- JP 2015073407 A